# FASCICULE DE BREVET EUROPEEN

(11) **EP 3 860 875 B1**
(45) Date de publication et mention de la délivrance du brevet: **14.06.2023**
(21) Numéro de dépôt: 19802238.6
(22) Date de dépôt: 27.09.2019
(51) Int. Cl.: B60L 9/12, B60L 15/20, B60L 9/28, H02M 1/14, H02M 1/12, H02M 3/335

(54) **SYSTEME EMBARQUE ET PROCEDE DE CONVERSION DE PUISSANCE MOYENNE TENSION POUR ENGIN DE TRANSPORT**
BORDSYSTEM UND VERFAHREN ZUR UMWANDLUNG VON MITTELSPANNUNGSLEISTUNG FÜR EIN TRANSPORTFAHRZEUG
ON-BOARD SYSTEM AND METHOD FOR CONVERTING MEDIUM-VOLTAGE POWER FOR A TRANSPORT VEHICLE

(30) Priorité: 03.10.2018 FR 1859188
(43) Date de publication de la demande: 11.08.2021
(73) Titulaire: Supergrid Institute, 69100 Villeurbanne (FR); Ecole Centrale de Lyon, 69130 Ecully (FR)
(72) Inventeur: STACKLER, Caroline, 69100 Villeurbanne (FR); MOREL, Florent, 01000 Bourg-en-Bresse (FR); WALLART, François, 69009 Lyon (FR)
(74) Mandataire: Cabinet Beau de Loménie
(86) Numéro de dépôt international: PCT/FR2019/052293
(87) Numéro de publication internationale: WO 2020/070417

(56) Documents cités:
- CN-A- 106 956 598
- DE-A1- 10 214 509
- DE-A1- 19 827 872
- US-A1- 2006 227 577
- US-A1- 2015 085 532

## Description

L'invention concerne le domaine des systèmes embarqués de conversion de puissance électrique sous moyenne tension alternative monophasée pour un engin mobile de transport, notamment pour les locomotives électriques, les tramways et les trolleybus.

L'invention trouvera donc une application particulièrement intéressante dans le domaine du matériel ferroviaire, donc des trains, tramways, ou métros à traction électrique.

L'invention s'applique aux engins mobiles de transport à traction électrique qui tirent leur puissance électrique nécessaire à la traction, et éventuellement en plus pour l'alimentation de fonctions auxiliaires (chauffage, climatisation, éclairage de bord, actionneurs auxiliaires, contrôle...), d'une source d'électricité externe à laquelle l'engin est relié en permanence par le biais d'un contact linéique fixe par exemple une caténaire, ou autre ligne de contact aérienne, ou un rail d'alimentation qui peut être fixé au sol. Le contact linéique fixe est donc agencé tout le long d'un trajet prévu pour l'engin de transport et ce dernier, lors d'un déplacement, suit le contact linéique et reste en contact mécanique et électrique permanent avec lui pour en tirer la puissance électrique nécessaire à son déplacement.

Pour ce faire, l'engin de transport comporte un circuit de connexion électrique qui comprend, en amont, au moins un contact embarqué capable de venir en contact mécanique et électrique avec le contact linéique fixe. Pour un train à traction électrique, le contact embarqué se présente souvent sous la forme d'un archet monté à l'extrémité d'un pantographe monté sur le toit de la locomotive, pour venir en contact contre le fil d'alimentation d'une caténaire.

L'invention concerne le cas de systèmes embarqués prévus pour des réseaux de chemin de fer dans lesquels le contact linéique fixe est alimenté en moyenne tension alternative monophasée, c'est-à-dire avec une tension alternative dont la valeur nominale de crête est comprise entre 1000 volts et 50.000 volts, par exemple 15.000 volts RMS ou 25.000 volts RMS. La tension alternative présente une fréquence généralement comprise entre 10 et 100 Hz, par exemple 16.7 Hz ou 50 Hz.

Il existe aujourd'hui de nombreuses topologies pour la réalisation de système de conversion de puissance utilisables dans les engins de transport. On trouvera une compilation des différentes topologies qui ont déjà été proposées dans les documents suivants :
Dujic 2012 : « Power Electronic Transformer Technology for Traction Applications - An Overview", Dražen Duji•, Frederick Kieferndorf, and Francisco Canales, ELECTRONICS, VOL. 16, NO. 1, JUNE 2012, DOI: 10.7251/ELS1216050D;
Farnesi 2016 : "Advances in Locomotive Power Electronic Systems Directly Fed Through AC Lines", Stefano Farnesi, Mario Marchesoni and Luis Vaccaro, 2016, International Symposium on Power Electronics, Electrical Drives, Automation and Motion, IEEE, pp. 657-664;
Feng 2017 : "Power Electronic Transformer-Based Railway Traction Systems: Challenges and Opportunities", Jianghua Feng, W. Q. Chu, , Zhixue Zhang, Z. Q. Zhu, IEEE Journal of Emerging and Selected Topics in Power Electronics ( Volume: 5, Issue: 3, Sept. 2017, pp. 1237 - 1253 ), DOI : 10.1109/JESTPE.2017.2685464.

D'autres documents de l'art antérieur sont:
DE 198 27 872 A1, DE 102 14 509 A1, CN 106 956 598, US 2006/227577 et US 2015/085532.

Certains systèmes embarqués de conversion de puissance comportent plusieurs tranches de conversion ayant chacune un étage de conversion de puissance alternative-continue relié électriquement, par un côté amont, au circuit de connexion. L'étage amont permet ainsi de transformer la tension alternative du contact linéique fixe en tension continue. La présence de plusieurs tranches de conversion permet, en interposant le côté amont de chaque tranche de conversion successivement en série dans le circuit de connexion, de soumettre chaque tranche de conversion à une tension qui est une fraction de la tension de réseau. Cela permet notamment de ne pas utiliser de transformateur abaisseur de tension fonctionnant à la fréquence de la tension du système d'alimentation à tension alternative et d'utiliser des composants électroniques qui ne peuvent pas supporter des tensions aussi élevées que celles de la source d'alimentation moyenne tension. On comprend que le nombre de tranches de conversion du système est choisi en fonction de la plus haute valeur de crête de la tension de réseau alternative avec laquelle l'engin est susceptible d'être exploité.

Dans certaines applications, notamment dans les applications dans le domaine ferroviaire, le volume des systèmes embarqués de conversion de puissance est critique, d'autant plus pour les systèmes comportant plusieurs tranches de conversion. En effet, le volume du système embarqué doit être réduit au maximum afin de gagner de l'espace pour les passagers, tout en limitant l'impact sur le rendement et la fiabilité de la conversion.

Dans un convertisseur alternatif-continu monophasé, en admettant qu'il soit parcouru par des courants et tensions sinusoïdaux, la puissance absorbée, ou fournie dans le cas d'un système réversible, du côté alternatif varie à deux fois la fréquence de la tension du réseau. L'amplitude de la variation est égale à la valeur moyenne de la puissance absorbée ou fournie si les courants et tensions sont en phase, et est supérieure à la valeur moyenne de la puissance absorbée ou fournie s'ils sont déphasés. Du côté continu du convertisseur, dans un cas idéal, la puissance absorbée, par exemple par le système de traction, est bien souvent constante. Il faut donc un dispositif pour absorber les variations de puissances. Sinon, il apparaîtrait, du côté continu du convertisseur, des ondulations de courant et/ou de tension, elles aussi au double de la fréquence du côté alternatif, ce qui dans la plupart des applications ne serait pas tolérable pour un bon fonctionnement de l'appareil consommateur de la puissance, par exemple la chaîne de traction électrique. Pour absorber ces variations de puissance, on prévoit généralement soit un surdimensionnement en tension des composants côté continu, soit un filtrage spécifique, ce qui nécessite un volume important de composants passifs.

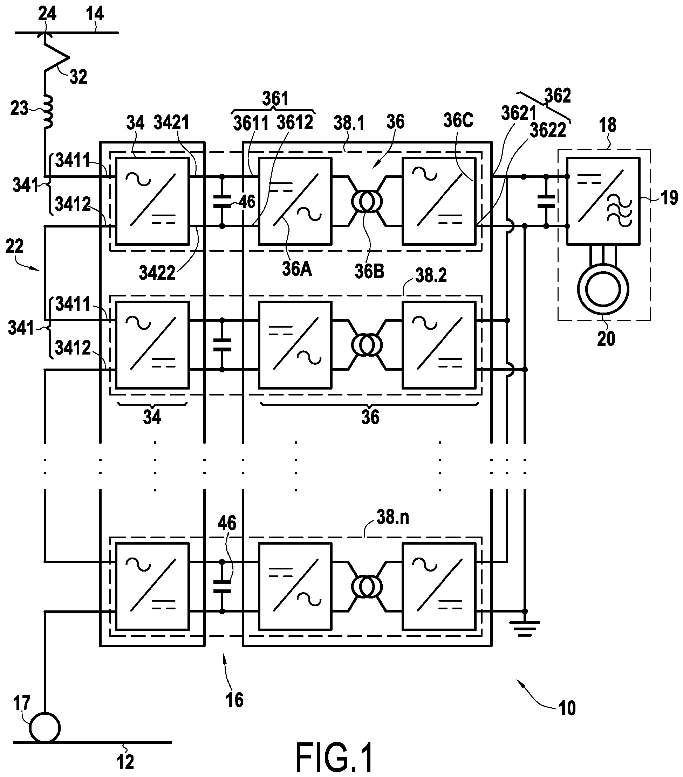

Ce problème se pose donc dans le cadre de la traction ferroviaire avec caténaire alternative (50 Hz ou 16.7 Hz). Cette contrainte est particulièrement présente pour le dimensionnement de convertisseurs dans des systèmes à transformateurs moyenne fréquence tels qu'illustrés à la Figure 1. Ces systèmes sont constitués d'un nombre de tranches de conversion identiques, les tranches de conversion étant connectées en série sur la caténaire via une inductance ou un filtre en entrée pour tenir la tension de caténaire, et connectées électriquement en parallèle en sortie sur le bus continu de traction. Chaque tranche de conversion comporte ainsi un étage amont de conversion alternatif-continu, qui alimente un bus intermédiaire. Sur ce bus intermédiaire est connecté un étage aval comprenant un convertisseur continu-continu isolé (parfois appelé « Dual active bridge » - « DAB ») incluant un transformateur moyenne fréquence, fonctionnant par exemple à une fréquence comprise entre 500 Hz et 50 kHz, et alimentant un bus de traction. Dans chaque tanche de conversion, le premier étage de conversion alternatif-continu génère des ondulations de tension sur le bus intermédiaire, qui sont susceptibles d'être reportées sur le bus de traction via le convertisseur continu-continu. En outre, dans certains cas, l'ondulation traverse également le transformateur moyenne fréquence, contraignant son dimensionnement.

Dans le domaine des moyens de transports ferroviaires ou assimilables, qui tirent leur puissance électrique nécessaire à la traction d'une source d'électricité externe à laquelle l'engin est relié en permanence par le biais d'un contact linéique fixe, différents système de filtrage, actifs ou passifs, ont été proposés, disposés soit sur le bus intermédiaire, soit sur le bus de traction. Ces dispositifs nécessitent soit des composants passifs de dimensionnement relativement important, soit des composants actifs supplémentaires, ce qui est dans tous les cas pénalisant en termes de coût, d'encombrement et de fiabilité.

L'invention vise donc à proposer un nouveau système embarqué de conversion de puissance qui permette de réduire le volume total du système en améliorant le système de filtrage de cette ondulation au double de la fréquence du côté alternatif.

L'nvention est définie par les revendications indépendantes 1 et 7. Des modes de alisation préférés sont décrits par les revendications dépendantes.

Dans ce but, l'invention propose un système embarqué de conversion de puissance électrique sous moyenne tension pour un engin mobile de transport comportant un système de traction embarqué ayant au moins un moteur électrique de traction, du type dans lequel le système embarqué de conversion :
- est embarqué dans l'engin mobile de transport et délivre, en aval, une tension continue de traction au système de traction,
- est adapté pour être, lors d'un déplacement de l'engin mobile de transport, en contact mécanique et électrique avec un contact linéique fixe relié à une source fixe de tension électrique de réseau, fournissant une moyenne tension alternative monophasée,
- comporte au moins un circuit de connexion électrique comprenant, en amont, au moins un contact embarqué capable de venir en contact mécanique et électrique avec le contact linéique fixe,
- comporte plusieurs tranches de conversion ayant chacune un étage amont de conversion de puissance alternative-continue relié électriquement, par un côté amont, au circuit de connexion,
- comporte, pour chaque tranche de conversion, entre l'étage amont de conversion de puissance alternative-continue et le système de traction, un étage aval de conversion de puissance continue-continue isolé, l'étage amont de conversion de puissance alternative-continue et l'étage aval de conversion de puissance continue-continue isolé de chaque tranche de conversion étant reliés l'un à l'autre, respectivement par un côté amont et par un côté aval, au niveau d'une connexion intermédiaire sous tension continue, la connexion intermédiaire comprenant un premier pôle intermédiaire et un second pôle intermédiaire.

Dans un tel système, pour chaque tranche de conversion, l'étage aval de conversion de puissance continue-continue isolé est réalisé sous la forme de l'association :
- en amont, d'un convertisseur primaire continu-alternatif ayant un côté amont continu, formant le côté amont de l'étage aval de conversion de puissance continue-continue isolé, et un côté aval alternatif;
- d'un transformateur ayant un bobinage primaire, connecté au côté aval du convertisseur primaire et un bobinage secondaire,
- en aval, un convertisseur secondaire ayant un côté amont alternatif connecté au bobinage secondaire du transformateur, et un côté aval continu qui forme le côté aval de l'étage aval de conversion de puissance continue-continue isolé.

De plus, dans un tel système, le convertisseur primaire continu-alternatif est réalisé sous la forme d'un pont complet d'interrupteurs électroniques commandés ayant :
- un premier côté relié au premier pôle intermédiaire de la connexion intermédiaire et un second côté relié au second pôle intermédiaire de la connexion intermédiaire ;
- un premier bras entre le premier côté et le second côté et comportant au moins un premier et au moins un second interrupteurs électroniques commandés, agencés successivement dans le premier bras, avec un point milieu entre les deux ;
- au moins un second bras, parallèle au premier bras entre le premier côté et le second côté, et comportant au moins un premier et au moins un second interrupteurs électroniques commandés, agencés successivement dans le second bras, avec un point milieu entre les deux ;
de telle sorte que la puissance d'entrée de couplage magnétique est prélevée entre le point milieu du premier bras et le point milieu du second bras.

Selon l'invention, pour chaque tranche de conversion,
- le bobinage primaire du transformateur de l'étage aval de conversion de puissance continue-continue isolé présente un point intermédiaire, entre une première partie et une seconde partie du bobinage primaire qui sont électriquement successives ;
- le convertisseur primaire continu-alternatif comporte un circuit capacitif interposé électriquement entre le point intermédiaire du bobinage primaire du transformateur et un côté du pont complet d'interrupteurs électroniques commandés du convertisseur primaire continu-alternatif.

Selon d'autres caractéristiques optionnelles d'un tel système, prises seules ou en combinaison :
- Le circuit capacitif interposé peut comporter, en série, une inductance.
- Les étages amont de conversion de puissance alternative-continue peuvent être connectés électriquement en série, par leur côté amont, dans le circuit de connexion.
- Plusieurs des, ou tous les étages aval de conversion de puissance continue-continue isolés peuvent être connectés entre eux électriquement en parallèle par leur côté aval.
- Au moins deux tranches de conversion peuvent avoir chacune un étage aval de conversion de puissance continue-continue isolé qui partage, avec l'autre étage aval de conversion de puissance continue-continue isolé, le convertisseur secondaire et le bobinage secondaire du transformateur, tout en ayant chacun leur propre convertisseur primaire.
- Le système peut être réversible pour transmettre de la puissance électrique, dans un sens moteur, de la source de tension vers le système de traction et, dans un sens inverse générateur, du système de traction vers la source de tension.

L'invention concerne par ailleurs un procédé de conversion de puissance électrique sous moyenne tension dans un engin mobile de transport pour alimenter un système de traction embarqué ayant au moins un moteur électrique de traction, du type dans lequel le procédé de conversion :
- délivre, en aval, une puissance électrique de traction sous une tension continue de traction,
- reçoit, en amont, une puissance électrique d'entrée sous une moyenne tension alternative d'entrée monophasée,
- répartit la puissance électrique d'entrée entre plusieurs tranches de conversion ayant un processus amont de conversion de puissance alternative-continue qui délivre une puissance intermédiaire sous une tension intermédiaire continue,
- convertit, dans chaque tranche de conversion, dans un processus aval de conversion de puissance continue-continue, la puissance intermédiaire sous la tension intermédiaire continue en la puissance électrique de traction sous la tension continue de traction.

Dans un tel procédé, pour chaque tranche de conversion (38.i), le processus aval de conversion de puissance continue-continue (36) comporte :
- une routine primaire de conversion de puissance continue-alternative qui convertit la puissance électrique intermédiaire sous tension intermédiaire continue en une puissance d'entrée de couplage magnétique sous tension alternative;
- une routine de transfert par couplage magnétique avec isolation galvanique qui transfert la puissance d'entrée de couplage magnétique en une puissance de sortie de couplage magnétique sous tension alternative au travers d'un transformateur ayant un bobinage primaire comprenant deux bornes auxquelles est appliquée la puissance d'entrée de couplage magnétique ;
- une routine secondaire de conversion de puissance alternative-continue qui convertit la puissance de sortie de couplage magnétique sous tension alternative en la puissance électrique de traction sous la tension continue de traction.

Dans un tel procédé, la routine primaire de conversion de puissance continue-alternative est réalisé dans un pont complet d'interrupteurs électroniques commandés ayant :
- un premier côté et un second côté entre lesquels est appliquée la tension intermédiaire ;
- un premier bras entre le premier côté et le second côté et comportant au moins un premier et au moins un second interrupteurs électroniques commandés, agencés successivement dans le premier bras, avec un point milieu entre les deux ;
- et au moins un second bras, parallèle au premier bras entre le premier côté et le second côté, et comportant au moins un premier et au moins un second interrupteurs électroniques commandés, agencés successivement dans le second bras, avec un point milieu entre les deux ;
de telle sorte que la puissance d'entrée de couplage magnétique est prélevée entre le point milieu du premier bras et le point milieu du second bras.

Selon l'invention, pour chaque tranche de conversion dans la routine primaire de conversion de puissance continue-alternative les interrupteurs électroniques commandés sont commandés alternativement selon une boucle répétitive comprenant :
- une phase de fonctionnement selon un premier mode différentiel, dans lequel la tension intermédiaire continue est appliquée au bobinage primaire du transformateur et, au moins une partie de la tension intermédiaire continue est appliquée à un circuit capacitif qui s'étend entre un point intermédiaire du bobinage primaire et un côté du pont d'interrupteurs électroniques commandés ;
- et, successivement et alternativement avec une phase de fonctionnement selon le premier mode différentiel, une phase de fonctionnement selon un second mode différentiel, dans lequel l'inverse de la tension intermédiaire continue est appliquée au bobinage primaire du transformateur et, au moins une partie de la tension intermédiaire continue est appliquée au circuit capacitif ;
et comprenant, entre deux phases successives de fonctionnement selon un mode différentiel, au moins une parmi :
- une phase de fonctionnement selon un premier mode commun, dans lequel une tension nulle est appliquée au bobinage primaire du transformateur en reliant ses deux bornes à un même côté du pont d'interrupteurs, et dans lequel une partie de la tension intermédiaire continue est appliquée au circuit capacitif ;
- une phase de fonctionnement selon un second mode commun, dans lequel une tension nulle est appliquée au bobinage primaire du transformateur en reliant ses deux bornes à un même côté du pont d'interrupteurs, et dans lequel une tension nulle est appliquée au circuit capacitif.

Selon d'autres caractéristiques optionnelles d'un tel procédé, prises seules ou en combinaison :
- La boucle répétitive peut être répétée à une fréquence de répétition au moins 10 fois supérieure à la fréquence de la moyenne tension alternative monophasée fournie par source fixe de tension électrique de réseau, de préférence au moins 50 fois supérieure.
- La boucle répétitive peut être répétée à une fréquence de répétition comprise entre 500 Hz 50 kHz.
- La boucle répétitive peut répéter, dans l'ordre, la séquence de phases de fonctionnement suivante :
   - premier mode différentiel ;
   - second mode commun ;
   - premier mode commun ;
   - second mode commun ;
   - second mode différentiel ;
   - second mode commun ;
   - premier mode commun ;
   - second mode commun.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique de principe d'un système de conversion de puissance pour un engin mobile de transport dans lequel peut être intégrée l'invention.
La **Figure 2** est une vue schématique d'un mode de réalisation d'un système de conversion de puissance pour un engin mobile de transport selon l'invention.
La **Figure 3** est une vue plus détaillée de l'étage aval de conversion de puissance continue-continue du système de conversion de puissance de la **Fig. 2****.**
Les **Figures 4A** à **4D** sont des vues schématiques de différents modes de fonctionnement plus détaillées de l'étage aval de conversion de puissance continue-continue du système de conversion de puissance de la **Fig. 3****.**
La **Figure 5** est un chronogramme illustrant un mode de réalisation du procédé de conversion de puissance pour un engin mobile de transport selon l'invention.
La **Figure 6** est une vue d'un deuxième mode de réalisation d'un étage aval de conversion de puissance continue-continue pour un système de conversion de puissance selon l'invention.

L'invention concerne un système embarqué **16** de conversion de puissance électrique sous moyenne tension pour un engin mobile de transport **10** comportant un système de traction embarqué **18** ayant au moins un moteur électrique de traction **20**.

L'invention sera plus particulièrement décrite dans le cadre de son application à une locomotive de train à traction électrique. Elle est cependant par ailleurs applicable de manière plus générale dans le domaine du matériel ferroviaire, donc aussi applicable à des tramways, ou à des métros à traction électrique. Elle peut encore être mise en oeuvre pour des trolleybus, ou plus généralement pour tout engin de transport comportant un moteur électrique de traction embarqué qui reçoit l'énergie nécessaire au déplacement de l'engin par le biais d'un contact embarqué sur l'engin et venant en contact avec un contact linéique fixe relié à une source fixe de tension électrique alternative monophasée de réseau.

Sur la **Fig. 1****,** on a illustré de manière très schématique un engin mobile **10** qui, dans cet exemple de réalisation, est destiné à circuler sur des rails **12** d'une voie de chemin de fer, et qui est destiné être alimenté par contact avec un contact linéique fixe **14** qui peut prendre la forme par exemple d'une caténaire, ou de tout autre type de ligne de contact aérienne. Dans l'invention, l'engin mobile **10** doit pouvoir être alimenté le long d'un trajet défini par l'étendue d'un tel contact linéique fixe **14**. L'invention peut aussi être mise en oeuvre avec un contact linéique fixe sous la forme d'un rail d'alimentation qui peut être fixé au sol. De préférence, le contact linéique fixe **14** est continu et s'étend sur une distance égale à la distance de déplacement de l'engin mobile **10,** entre un point de départ de l'engin et un point d'arrivée de l'engin. Bien entendu, le contact linéique fixe **14** peut être réalisé sous la forme de plusieurs éléments successifs raccordés électriquement entre eux. Des discontinuités de contact ponctuelles peuvent être acceptables, notamment aux jonctions entre de tels éléments successifs. De telles discontinuités de contact ponctuelles n'empêchent pas que l'on considère le contact comme étant un contact permanent.

Le contact linéique fixe **14** est donc relié à une source fixe de tension électrique fournissant une moyenne tension alternative monophasée, dite tension de réseau. Une telle tension alternative présente une valeur nominale de crête qui est par exemple comprise entre 1.000 volts et 50.000 volts. Dans certains cas, la tension alternative est définie par sa valeur efficace (dite « RMS »), par exemple 15.000 volts RMS ou 25.000 volts RMS. La fréquence de la tension alternative est par exemple comprise entre 10 et 100 hertz, les valeurs les plus fréquentes étant de 16,7 Hz, de 50 Hz ou de 60 Hz. L'invention sera décrite dans le cas où la source de tension électrique est une source monophasée. Dans ce cas, le contact linéique fixe **14** peut comporter un unique conducteur électrique s'étendant sur l'étendue du contact linéique fixe **14**.

L'engin mobile **10** comporte donc un système embarqué de conversion de puissance électrique **16** qui est embarqué dans l'engin mobile **10**. Le système embarqué de conversion de puissance électrique **16** comporte un circuit de connexion électrique **22** par lequel, lors d'un déplacement de l'engin mobile de transport, le système embarqué de conversion 16 est, par un côté amont, en contact mécanique et électrique permanent avec le contact linéique **14**.

De manière connue, le circuit de connexion électrique **22** du système embarqué de conversion de puissance **16** comporte également une portion retour, par exemple sous la forme d'une liaison électrique avec un potentiel électrique neutre. Dans le cas d'un engin ferroviaire, qui sera le cas illustré dans les figures, cette portion retour du circuit de connexion comporte la plupart du temps un contact électrique entre une roue **17** de l'engin mobile **10** et le rail **12**, ce dernier étant relié électriquement à la terre, donc à un potentiel neutre. Cependant, on peut dans tous les cas envisager, comme cela se fait dans les infrastructures dédiées à des trolleybus, que la portion retour du circuit de connexion soit réalisée sous la forme d'un second contact linéique fixe, sous la forme d'un fil aérien ou d'un rail, qui peut par exemple s'étendre en parallèle du contact linéique fixe relié à la source de tension électrique.

On comprend bien que le contact linéique fixe **14** et la source fixe de tension électrique ne font pas partie du système embarqué de conversion **16**, ni de l'engin mobile de transport **10**. Ces éléments font partie d'une infrastructure de réseau de transport. Ces éléments sont fixes en ce qu'ils ne se déplacent pas avec l'engin mobile **10**.

Le rôle principal du système de conversion puissance **16** est, à partir de la tension du contact linéique fixe **14**, de délivrer, en aval, une tension continue de traction à un système de traction **18**. Ceci se produit lorsque l'engin mobile **10** fonctionne en mode moteur. Toutefois, le système embarqué de conversion de puissance **16** sera de préférence électriquement réversible, ce qui sera utile lorsque l'engin mobile **10** fonctionne dans un mode de freinage régénératif au cours duquel le moteur électrique de traction **20** est utilisé en tant que génératrice électrique, transformant l'énergie cinétique de l'engin mobile **10** en une énergie électrique qui peut, via le système embarqué de conversion de puissance **16**, transmettre de la puissance électrique du système de traction **18** vers la source de tension, par l'intermédiaire du contact linéique fixe **14**.

Par convention, on considère que, en mode moteur, une puissance électrique est transférée dans un sens moteur d'amont en aval depuis un côté amont du système embarqué de conversion **16** qui est relié au contact linéique fixe **14**, vers le système de traction **18** qui est relié électriquement à un côté aval du système embarqué de conversion **16**. Les notions de « amont » et « aval » correspondent donc à ce mode de fonctionnement moteur. Dans le mode de fonctionnement régénératif, la puissance électrique est donc transférée de l'aval vers l'amont, depuis un côté aval du système embarqué de conversion de puissance **16** qui est relié au système de traction **18**, vers le côté amont du système embarqué de conversion de puissance **16** qui est relié électriquement au contact linéique fixe **14**.

Le système de traction **18** de l'engin mobile **10** est un système comportant au moins un moteur électrique de traction **20** qui tire sa puissance électrique du système embarqué de conversion **16** et qui provoque le déplacement de l'engin mobile **10**. Le moteur électrique de traction **20** peut être de tout type approprié, notamment de tout type habituellement mis en oeuvre dans les engins de transport à traction électrique. Dans l'exemple illustré à la **Fig. 1**, le moteur électrique de traction **20** est un moteur à courant alternatif triphasé. De la sorte, dans ce cas, le système de traction **18** comporte un convertisseur de puissance électrique continue-alternative **19** dont un côté amont est relié électriquement au côté aval du système embarqué de conversion puissance **16**, et dont un côté aval est relié électriquement au moteur électrique de traction **20**. Toutefois, le moteur électrique **20** pourrait aussi être un moteur à courant continu. De préférence, le système de traction **18** comporte une unité électronique de commande de son fonctionnement (non représentée). Dans certains cas, le système de traction **18** pourra comporter plusieurs moteurs électriques de traction alimentés chacun par le même système embarqué de conversion de puissance **16**. Chacun de ces moteurs peut être relié électriquement au système embarqué de conversion de puissance **16** par un convertisseur de puissance électrique **19** propre à ce moteur, ou par un convertisseur de puissance **19** partagé avec d'autres moteurs.

On note par ailleurs que la puissance électrique délivrée en aval par le système embarqué de conversion de puissance **16** peut être utilisée par d'autres équipements électriques de l'engin mobile **10**, par exemple un chauffage, une climatisation, un éclairage de bord et/ou de circulation, des actionneurs auxiliaires, des unités électroniques de contrôle, etc.

Le circuit de connexion électrique **22** comprend, en amont, au moins un contact embarqué **24** capable de venir en contact mécanique et électrique avec le contact linéique fixe. C'est aux bornes de ce circuit de connexion électrique **22** qu'est appliquée la tension électrique de réseau alternative. Le circuit de connexion électrique **22** permet d'alimenter le système sous tension alternative pour permettre le déplacement de l'engin mobile **10**, et applique cette tension à plusieurs tranches de conversion de puissance du système **16**. Le circuit de connexion électrique **22** comprend généralement une inductance de charge **23**. Cette inductance peut être remplacée par un filtre électrique consistant en un arrangement de condensateurs, d'inductances et/ou de résistances.

Le contact embarqué **24** est de préférence un élément physique dont la forme est adaptée à un maintien du contact électrique avec le contact linéique fixe **14** lors du déplacement de l'engin mobile **10**. Dans les systèmes ferroviaires, un tel contact embarqué se présente souvent sous la forme d'un archet. Dans les systèmes de trolleybus, un tel contact embarqué se présente souvent sous la forme d'un frotteur en bronze ou en carbone, le frotteur étant parfois remplacé par une roulette. Le contact embarqué est généralement disposé à l'extrémité d'un mécanisme de support articulé. Ce mécanisme de support articulé, qui est solidaire de l'engin mobile **10** mais qui est articulé sur un élément structurel de celui-ci, prend par exemple la forme d'un pantographe **32** tel que sommairement représenté sur les figures, notamment dans les applications ferroviaires, ou la forme de perches articulées, notamment dans les applications de type trolleybus. Le mécanisme de support articulé est généralement muni de ressorts qui permettent de plaquer en permanence le contact embarqué **24** en appui mécanique contre le contact linéique fixe **14**, de manière à assurer le contact électrique.

Le système embarqué de conversion de puissance **16** comporte au moins :
- un étage amont de conversion de puissance alternative-continue **34**, qui est relié électriquement, par un côté amont **341**, au circuit de connexion **22** ; cet étage amont est donc un convertisseur de puissance électrique de type alternatif continu ;
- un étage aval de conversion de puissance continue-continue isolé **36** qui est relié électriquement, par un côté amont **361,** au côté aval **342** de l'étage amont de conversion de puissance alternative-continue **34** ; cet étage aval de conversion de puissance continue-continue **36**, isolé, présente un côté aval **362** qui forme le côté aval du système embarqué de conversion de puissance **16** capable de délivrer une tension continue au système de traction **18.**

Chaque étage amont **34** ou aval **36** peut être réalisé de différentes manières, généralement sous la forme d'un montage de composants d'électronique de puissance, notamment à base d'interrupteurs électroniques de type diode, MOSFET, thyristor et/ou IGBT, dont la commutation peut être commandée par une unité électronique de commande.

On prévoit que le système embarqué de conversion de puissance comporte plusieurs tranches de conversion **38.1**, **38.2**, ..., **38.i**, ..., **38.n.** Ces n tranches de conversion, par exemple entre 2 et 20 tranches de conversion, sont agencées dans le système embarqué de conversion **16** de telle sorte que chacune n'est soumise qu'à une partie, une fraction, de la tension électrique fournie par la source de tension de réseau alternative. Chaque tranche de conversion fournit de la puissance électrique continue au système de traction **18**, ou à un autre système embarqué consommateur d'énergie électrique (décrit précédemment comme « auxiliaire »). A cet effet, les étages amont de conversion de puissance alternative-continue **34** sont connectés électriquement en série, par leur côté amont, dans le circuit de connexion **22.**

Ainsi, chaque tranche de conversion **38.1, 38.2,** ..., **38.n** comporte un étage amont de conversion de puissance alternative-continue **34** relié électriquement, par un côté amont **341,** au circuit de connexion **22,** et le système embarqué de conversion **16** comporte, pour chaque tranche de conversion **38.1, 38.2,** ..., **38.n,** entre l'étage amont de conversion de puissance alternative-continue **34** et le système de traction **18** ou autre système embarqué consommateur d'énergie électrique, un étage aval de conversion de puissance continue-continue isolé **36.** Pour chaque tranche de conversion **38.1**, **38.2**, ..., **38.n**, l'étage amont de conversion de puissance alternative-continue **34** et l'étage aval de conversion de puissance continue-continue isolé **36** sont reliés électriquement l'un à l'autre, respectivement par un côté aval **342** et par un côté amont **361**, au niveau d'une connexion intermédiaire. Comme on le verra sur les figures, cette liaison électrique se fait au niveau de pôles intermédiaires sous tension continue **40**, **42** qui forment la connexion intermédiaire entre l'étage amont **34** et l'étage aval **36** de conversion puissance d'une même tranche de conversion. L'invention a pour but notamment que cette tension continue au niveau des pôles intermédiaires **40**, **42** présente le moins de variations possibles, sans imposer des moyens de filtrage trop volumineux. Dans certains modes de réalisation, l'invention permet de plus d'éviter de dégrader la fiabilité en évitant l'ajout de composants semi-conducteurs.

Pour chaque tranche de conversion de puissance, le côté amont **341** de l'étage amont de conversion de puissance est constitué généralement par deux bornes de connexion amont **3411**, **3412**. Parfois qualifiées de bornes d'entrée, ces bornes amont **3411**, **3412**, sont reliées électriquement au circuit de connexion **22**. L'étage amont de conversion de puissance alternative-continue d'une première tranche de conversion **38.1** comporte ainsi une première borne de connexion amont **3411** qui est reliée électriquement à une portion amont du circuit de connexion 22, du côté du contact embarqué **24**. Une deuxième borne de connexion amont **3412** de ce même étage amont de la première tranche de conversion **38.1** est reliée électriquement à une première borne **3411** de l'étage amont d'une deuxième tranche de conversion **38.2.** La deuxième borne de connexion amont **3412** de ce même étage amont de la deuxième tranche de conversion **38.2** est reliée électriquement à une première borne **3411** de l'étage amont d'une troisième tranche de conversion **38.3**, et ainsi de suite. Une deuxième borne de connexion amont **3412** de l'étage amont de la nième et dernière tranche de conversion **38.n** est reliée électriquement à la portion retour **17** du circuit de connexion **22**.

Pour chaque tranche de conversion de puissance, le côté aval **342** de l'étage amont de conversion de puissance est constitué généralement par deux bornes aval de connexion **3421, 3422** de l'étage amont, parfois trois ou plus. Parfois qualifiées de bornes de sortie, ces bornes aval **3421, 3422** sont reliées électriquement chacune respectivement à une borne amont **3611, 3612** (ou bornes d'entrée) correspondante de l'étage aval de conversion de puissance **36** de la tanche de conversion considérée. Pour chaque tranche de conversion, on a généralement aux moins deux bornes aval **3421, 3422** de l'étage amont **34** qui sont connectées chacune respectivement à une des bornes amont **3611, 3612** de l'étage aval 36.

Une borne aval **3421, 3422** de l'étage amont **34** et la borne amont **3611, 3612** de l'étage aval **36** qui lui est reliée électriquement, forment un pôle intermédiaire entre l'étage amont **34** et l'étage aval 36. Pour chaque tranche de conversion comprenant un étage amont de conversion de puissance alternative-continue **34** et un étage aval de conversion de puissance continue-continue **36**, on a généralement une connexion intermédiaire formée de deux pôles intermédiaires **40**, **40.1**, **40.2**,..., **40.i**, ..., **40.n**, **42**, **42.1**, ..., **42.i**, ..., **42.n** entre lesquels est établie une tension continue. Parfois, le mode de réalisation des étages amont **34** et aval **36** de conversion de puissance fait qu'il y a plus de deux pôles intermédiaires pour la connexion intermédiaire.

En d'autres termes chaque étage amont de conversion de puissance alternative-continue **34** et chaque étage aval de conversion de puissance continue-continue isolé **36** comporte chacun un côté amont **341, 361,** avec des bornes amont **3411**, **3412**, **3611**, **3612**, et un côté aval **342**, **362**, avec des bornes aval **3421**, **3422**, **3621**, **3622**, et, dans une tranche de conversion de puissance, les bornes aval **3421, 3422** de l'étage amont de conversion de puissance alternative-continue sont reliées chacune respectivement à une des bornes amont **3611, 3612** de l'étage aval **36** de conversion de puissance continue-continue isolé de la tranche de conversion correspondante, au niveau d'un pôle intermédiaire électriquement commun à la borne amont et à la borne aval considérée.

Dans les exemples illustrés, on a prévu la présence, entre les pôles intermédiaires d'une tranche de conversion **38**, **38.1**,..., **38.n**, d'un filtre électrique **46**, notamment d'un filtre capacitif, par exemple une capacité. Le filtre électrique **46** est donc inséré en parallèle du côté amont **361** de l'étage aval **36** de la tranche de conversion considérée. On note en réalité que le filtre **46** pourrait être incorporé dans le côté amont **361** de l'étage aval **36**, ou dans le côté aval **342** de l'étage amont **34** de la tranche de conversion considérée. Ainsi, dans les exemples illustrés, pour chaque tranche de conversion, une capacité **46** est agencée électriquement en parallèle de deux bornes amont **3611**, **3612** du côté amont **361** de l'étage aval de conversion de puissance continue-continue isolé **36**.

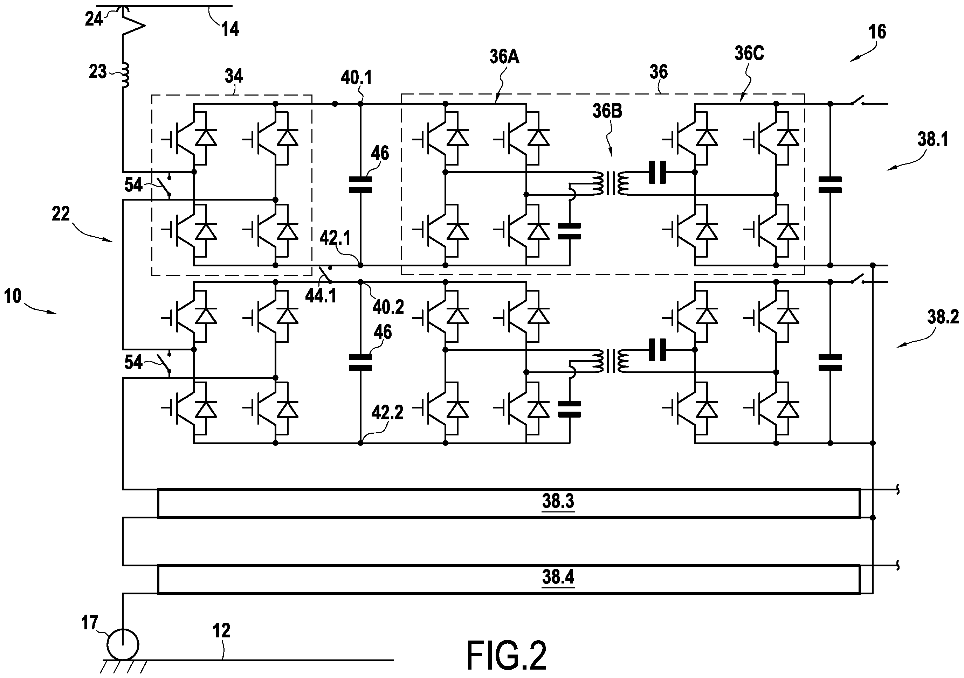

On note par ailleurs que, comme illustré à la **Fig. 2****,** on peut prévoir que les tranches de conversion soient pourvues d'un interrupteur de shunt **54** qui court-circuite le côté amont de l'étage amont de conversion de puissance alternative-continue **34**. En fonctionnement normal, un tel interrupteur de shunt **54** est ouvert et il n'est fermé que pour mettre hors-service une des tranches de conversion, par exemple en cas de défaut sur cette tranche. Dans ce cas, les autres tranches de conversion de puissance du système **16**, non shuntées, peuvent continuer de fonctionner. Cet interrupteur de shunt **54** est généralement considéré comme intégré dans l'étage amont de conversion de puissance alternative-continue **36**.

De manière connue, comme illustré sur les **Figs. 1** et **2**, on peut prévoir que plusieurs étages aval de conversion de puissance continue-continue isolés **36**, voire tous les étages aval de conversion de puissance continue-continue isolés **36**, soient connectés entre eux électriquement en parallèle par leur côté aval **362**. De la sorte, les courants électriques convertis par les tranches de conversion sont ajoutés les uns aux autres, pour fournir au système de traction **18** de fortes intensités de courant.

Cependant, on peut prévoir :
- une premier groupe de tranches de conversion pour lequel les étages aval de conversion de puissance continue-continue isolés **36** sont connectés entre eux électriquement en parallèle par leur côté aval **362**, pour alimenter un premier système consommateur, par exemple un premier système de traction électrique **18**,
- au moins un deuxième groupe pour lequel les étages aval de conversion de puissance continue-continue isolés **36** sont connectés entre eux électriquement en parallèle par leur côté aval **362**, mais indépendamment de ceux du premier groupe, pour alimenter un deuxième système consommateur, par exemple un deuxième système de traction électrique ou un système électrique auxiliaire.

On note qu'on peut prévoir plus de deux groupes. Eventuellement, on peut prévoir que chaque tranche de conversion constitue à elle seule un groupe. Dans ce cas, chaque étage aval de conversion de puissance continue-continue isolé **36** est indépendant des autres étages aval de conversion de puissance continue-continue isolés **36**, pour alimenter chacun de manière indépendante un système consommateur, par exemple un système de traction électrique **18** ou un système électrique auxiliaire **56**.

Dans une tranche de conversion de puissance, l'étage aval de conversion de puissance continue-continue isolé **36** est réalisé sous la forme de l'association :
- en amont, d'un convertisseur primaire **36A** continu-alternatif ayant un côté amont continu, formant le côté amont **361** de l'étage aval de conversion de puissance continue-continue isolé **36**, et un côté aval alternatif ;
- d'un transformateur **36B** ayant un bobinage primaire, connecté au côté aval du convertisseur primaire **36A**, et un bobinage secondaire,
- en aval, un convertisseur secondaire **36C** ayant un côté amont alternatif connecté au bobinage secondaire du transformateur **36B**, et un côté aval continu qui forme le côté aval **362** de l'étage aval de conversion de puissance continue-continue isolé **36.**

Chaque bobinage primaire ou secondaire peut comprendre un unique enroulement ou au contraire plusieurs enroulements. Le transformateur peut être monophasé ou polyphasé.

La présence du transformateur **36B**, de type statique avec enroulements primaire(s) et secondaire(s) autour d'un circuit magnétique, entre le convertisseur primaire **36A** et le convertisseur secondaire **36C**, assure une isolation galvanique entre ces deux convertisseurs et confère donc à l'étage aval de conversion de puissance **36** son caractère isolé.

Dans l'exemple illustré, chaque étage aval de conversion de puissance continue-continue isolé **36** est indépendant des étages aval de conversion de puissance continue-continue isolé **36** des autres tranches de conversion de puissance, au sens que chaque étage aval de conversion de puissance continue-continue isolé **36** comporte son propre convertisseur primaire **36A**, son propre transformateur **36B** et son propre convertisseur secondaire **36C**.

Au contraire, on peut prévoir un système embarqué de conversion de puissance **16** comportant plusieurs tranches de conversion ayant chacune un étage aval de conversion de puissance continue-continue isolé, et comportant au moins deux tranches de conversion de puissance qui ont chacune un étage aval de conversion de puissance continue-continue isolé qui partage au moins une partie de ses composants avec un ou plusieurs autres étage(s) aval de conversion de puissance continue-continue isolé(s) **36**.

Ainsi, dans certains modes de réalisation, on peut avoir un premier lot de tranches de conversion de puissance qui ont chacune un étage aval de conversion de puissance continue-continue isolé **36** qui partagent le convertisseur secondaire et l'enroulement secondaire, tout en ayant chacun leur propre convertisseur primaire. Par exemple un tel premier lot peut être prévu pour alimenter un premier système de traction électrique **18**. Par ailleurs, un tel système **16** peut présenter un deuxième lot composé d'autres tranches de conversion de puissance, qui ont elles aussi chacune un étage aval de conversion de puissance continue-continue isolé **36** qui partagent le convertisseur secondaire et l'enroulement secondaire, tout en ayant chacun leur propre convertisseur primaire. Dans un tel cadre, deux lots de tranches de conversion de puissance peuvent partager le même circuit magnétique de transformateur **36B**. De manière similaire, on peut prévoir que toutes les tranches de conversion de puissance partagent le même circuit magnétique de transformateur **36B**, bien qu'ayant chacune leur propre convertisseur primaire **36A**, leur propres enroulements primaire et secondaire de transformateur **36B**, et leur propre convertisseur secondaire **36C**. Ainsi, de manière plus générale, on peut avoir un système de conversion de puissance **16** qui possède, pour un ensemble de tranches de conversion de puissance ayant chacune un étage aval de conversion de puissance continue-continue isolé **36**, un unique transformateur **36B**, défini par un unique circuit magnétique partagé.

La **Fig. 2** illustre plus particulièrement, avec un peu plus de détails et de manière non limitative, des structures possibles pour la réalisation :
- d'un étage amont de conversion de puissance alternative-continue **34** ;
- d'un convertisseur primaire **36A** continu-alternatif de l'étage aval de conversion de puissance continue-continue **36** ;
- d'un convertisseur secondaire **36C** alternatif-continu de l'étage aval de conversion de puissance continue -continue **36**.

Ces éléments sont réalisés chacun sous la forme d'un montage de composants d'électronique de puissance. Dans la plupart des cas, chacun de ces trois éléments est réalisé sous la forme d'un montage, en pont complet ou en demi-pont, d'interrupteurs électroniques de puissance. Ces interrupteurs électroniques de puissance peuvent être des transistors par exemple de type IGBT ou MOSFET, des diodes, des thyristors ou des combinaisons série et/ou parallèle de ces composants.

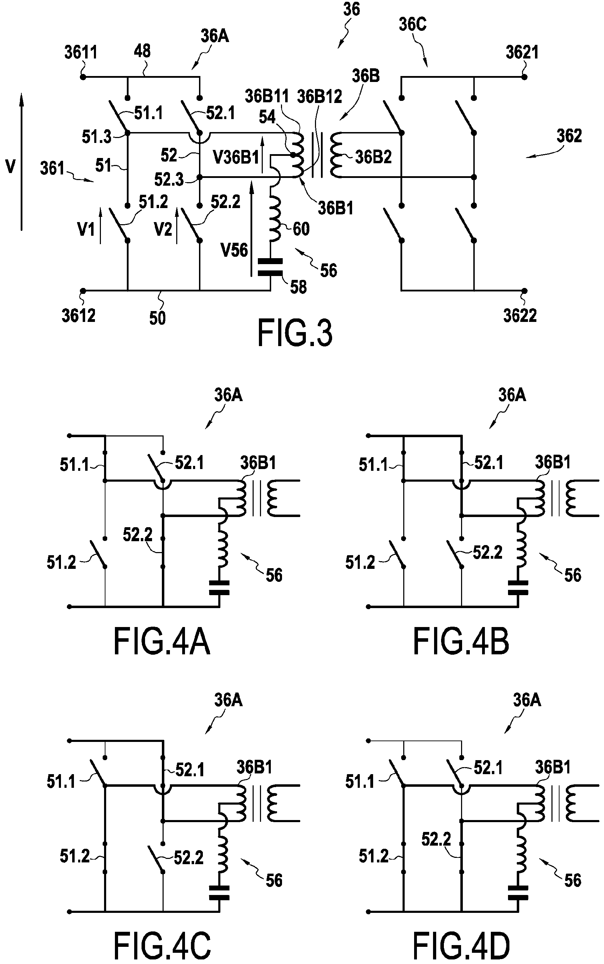

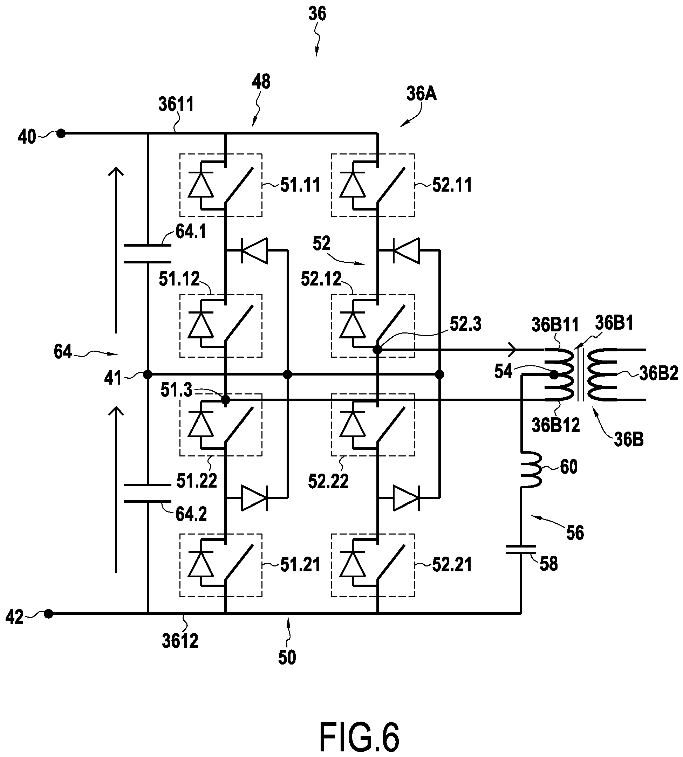

On a représenté de manière plus détaillée, sur la **Fig. 3**, un étage aval de conversion de puissance continue-continue **36** pour une tranche de conversion. Cet exemple reprend pour l'essentiel une structure présentée à la figure 6 du document Feng 2017 cité plus haut. Le convertisseur primaire **36A** continu-alternatif et le convertisseur secondaire **36C** alternatif-continu sont réalisés chacun, pour chaque étage de conversion, par un montage du type pont d'interrupteurs électroniques commandés. Dans le mode de réalisation illustré à la **Fig. 3**, il s'agit d'un pont en H, ou pont complet, de quatre interrupteurs électroniques de puissance, par exemple des IGBT à haute tension, commandés par une unité électronique de commande (ECU) ici selon une architecture à deux niveaux de tension.

L'étage aval de conversion de puissance continue-continue **36** présente ainsi une structure de base de type « dual active bridge ». Une structure de type « dual active bridge » est décrite dans le document « A three-phase soft-switched high-power-density DC/DC converter for high-power applications », par Rik. W.A.A. De Doncker, D.M. Divan, and M.H. Kheraluwala, publié dans « IEEE Transactions on Industry Applications » (Volume 27, N°1, Jan/Fev 1991). Cette structure de base est cependant modifiée selon l'invention par la présence d'un circuit capacitif détaillé ci-après.

L'étage aval de conversion de puissance continue-continue 36 peut être de type résonant, notamment avec un transformateur 36B en série avec des condensateurs en amont et/ou en aval. Cependant, de manière générale, on peut aussi prévoir, que l'étage aval de conversion de puissance continue-continue **36** soit de type non-résonant.

On a illustré sur la **Fig. 3** un premier mode de réalisation d'un convertisseur primaire continu-alternatif **36A** d'une tranche de conversion, réalisé, ici, sous la forme d'un pont complet à deux niveaux de tension, formé d'interrupteurs électroniques commandés. Un tel pont complet, aussi appelé en H, comporte un premier côté **48**, comprenant une première **3611** des bornes amont de l'étage aval **36**, reliée au premier pôle intermédiaire **40** de la connexion intermédiaire, et un second côté **50**, comprenant une seconde **3612** des borne amont de l'étage aval **36**, reliée au second pôle intermédiaire **42** de la connexion intermédiaire. Ainsi, le premier côté **48** du pont d'interrupteurs, ici le pont complet à deux niveaux de tension, est au même potentiel électrique que le premier pôle intermédiaire **40** de la connexion intermédiaire, et le second côté **50** du pont d'interrupteurs, ici le pont complet à deux niveaux, est au même potentiel électrique que le second pôle intermédiaire **42** de la connexion intermédiaire.

De manière parfaitement classique, le pont complet **36A** comporte un premier bras **51** qui relie électriquement le premier côté **48** et le second côté **50**. Ce premier bras **51** comporte un premier interrupteur électronique commandé **51.1**, et un second interrupteur électronique commandé **51.2**. Les deux interrupteurs commandés **51.1**, **51.2** sont agencés successivement dans le premier bras, avec un point milieu **51.3** entres les deux.

Le pont complet **36A** comporte un second bras **52**, qui relie électriquement le premier côté **48** et le second côté **50** du pont complet **36A**, en parallèle électriquement au premier bras **51.** Ce second bras **52** comporte un premier interrupteur électronique commandé **52.1** et un second interrupteur électronique commandé **52.2**. Les deux interrupteurs commandés **52.1**, **52.2** sont agencés successivement dans le second bras **52**, avec un point milieu entres les deux **52.3**.

Le bobinage primaire **36B1** du transformateur **36B** est raccordé électriquement d'une part au point milieu **51.3** du premier bras **51** et d'autre part au point milieu **52.3** du second bras **52** du pont d'interrupteurs électroniques commandés **36A.**

On a illustré sur la **Fig. 6** un deuxième mode de réalisation d'un convertisseur primaire continu-alternatif **36A** d'une tranche de conversion, réalisé sous la forme d'un pont d'interrupteurs électroniques commandés, ici sous la forme d'un pont complet à trois niveaux de tension, lui aussi formé d'interrupteurs électroniques commandés.

En entrée d'un convertisseur primaire continu-alternatif **36A**, on a agencé un pont diviseur de tension **64**, ici sous la forme de deux capacités **64.1**, **64.2** agencées en série entre les pôles intermédiaires **40**, **42**, pour former, entre les deux capacités **64.1**, **64.2** et donc entre les pôles intermédiaires **40**, **42**, un troisième pôle **41** à un potentiel compris entre les potentiels respectifs des pôles intermédiaires **40**, **42**. Cette configuration permet d'utiliser dans le convertisseur primaire continu-alternatif **36A** des agencements de composants différents, tels que ceux connus sous le nom NPC (Neutral Point Clamped). Ce type de circuit est connu pour permettre la réalisation de convertisseurs dans lesquels la tension (par exemple entre les pôles intermédiaires **40** et **42**) est supérieure à la tension que supporte un composant dans le convertisseur (par exemple les interrupteurs commandés). Ici la structure est de type NPC à 3 niveaux de tension. Des structures NPC à plus de niveaux sont connues et pourraient être utilisées dans le cadre de l'invention.

Le convertisseur primaire continu-alternatif **36A** de l'étage aval **36** de conversion de puissance du convertisseur de puissance continue - continue isolé, est ainsi de type pont complet NPC à 3 niveaux. On retrouve un premier côté **48**, comprenant une première **3611** des bornes amont de l'étage aval **36**, reliée au premier pôle intermédiaire **40** de la connexion intermédiaire, et un second côté **50**, comprenant une seconde **3612** des borne amont de l'étage aval **36**, reliée au second pôle intermédiaire **42** de la connexion intermédiaire. Ainsi, le premier côté **48** du pont complet d'interrupteurs, est au même potentiel électrique que le premier pôle intermédiaire **40** de la connexion intermédiaire, et le second côté **50** du pont complet d'interrupteurs, est au même potentiel électrique que le second pôle intermédiaire **42** de la connexion intermédiaire.

On retrouve aussi un premier bras **51** qui relie électriquement le premier côté **48** et le second côté **50**. Ce premier bras **51** comporte un groupe de deux premiers interrupteurs électroniques commandés **51.11**, **51.12** et un groupe de deux seconds interrupteurs électroniques commandés **51.21**, **51.22.** Les quatre interrupteurs commandés **51.11**, **51.12**, **51.21**, **51.22** sont agencés successivement dans le premier bras, avec un point milieu **51.3** entre le groupe des premiers interrupteurs électroniques commandés **51.11**, **51.12** et le groupe des seconds interrupteurs électroniques commandés **51.21**, **51.22**.

On retrouve aussi un second bras **52** qui relie électriquement le premier côté **48** et le second côté **50**. Ce second bras **52** comporte un groupe de deux premiers interrupteurs électroniques commandés **52.11**, **52.12** et un groupe de deux seconds interrupteurs électroniques commandés **52.21**, **52.22.** Les quatre interrupteurs commandés **52.11, 52.12**, **52.21**, **52.22** sont agencés successivement dans le second bras, avec un point milieu **52.3** entre le groupe des premiers interrupteurs électroniques commandés **52.11, 52.12** et le groupe des seconds interrupteurs électroniques commandés **52.21, 52.22.** Dans chaque bras **51**, **52**, chacun des deux groupes d'interrupteurs électroniques commandés est par ailleurs relié électriquement, entre les deux interrupteurs électroniques commandés du groupe considéré, au troisième pôle **41**, par l'intermédiaire d'une diode ne permettant le passage du courant que dans le sens allant du troisième pôle **41** vers le groupe considéré. Comme pour le mode de réalisation de la **Fig. 3**, le bobinage primaire **36B1** du transformateur **36B** est raccordé électriquement d'une part au point milieu **51.3** du premier bras **51** et d'autre part au point milieu **52.3** du second bras **52** du pont complet **36A**.

Dans les deux modes de réalisation des **Figs. 3** et **6****,** le bobinage primaire **36B1** du transformateur **36B** de l'étage aval de conversion de puissance continue-continue isolé **36** présente un point intermédiaire **54**, entre une première partie **36B11** et une seconde partie **36B12** du bobinage primaire **36B1** qui sont électriquement successives.

Selon un aspect de l'invention, le convertisseur primaire continu-alternatif **36A** comporte un circuit capacitif **56** interposé électriquement entre le point intermédiaire **54** du bobinage primaire **36B1** du transformateur **36B** et un des deux côtés du pont complet d'interrupteurs électroniques commandés du convertisseur primaire continu-alternatif **36A**. Le circuit capacitif **56** introduit donc une asymétrie dans le système, de sorte qu'il est possible de qualifier un côté du pont d'interrupteurs électroniques commandés, celui auquel le circuit capacitif **56** est relié de « côté filtre » du pont complet **36A**. L'autre côté du pont d'interrupteurs électroniques commandés est alors qualifié de « côté opposé ».

Dans l'exemple illustré, le circuit capacitif **56** est relié électriquement au second côté **50** du pont complet d'interrupteurs électroniques commandés du convertisseur primaire continu-alternatif **36A**. Dans ce cas, on peut qualifier le second côté **50** de côté filtre du pont d'interrupteurs électroniques commandés **36A.** Cependant, on aurait pu faire le choix d'avoir le premier côté **48** comme côté filtre, à la place du second côté.

Le circuit capacitif **56** comprend au moins une capacité **58** interposée électriquement entre le côté filtre **50** et le point intermédiaire **54** du bobinage primaire **36B1.**

Dans l'exemple illustré, le circuit capacitif **58** comporte par ailleurs, en série avec la capacité **58**, une inductance. Cette inductance **60** n'est pas nécessaire dans tous les cas, en tous les cas pas sous la forme d'un composant discret, formant un composant spécifique. Cela pourra dépendre notamment de la valeur d'inductance de fuite entre la première partie **36B11** et la deuxième partie **36B12** du bobinage primaire **36B1.** Cette inductance **60** peut comprendre une inductance discrète, formant un composant spécifique, par exemple une bobine, et/ou cette inductance **60** peut comprendre une inductance intégrée, par exemple résultant de l'inductance propre d'un conducteur formant un tronçon du circuit capacitif. Dans l'exemple, l'inductance **60** est en série avec la capacité **58** dans le circuit capacitif **56**, entre le point intermédiaire **54** du bobinage primaire **36B1** du transformateur **36B** et le côté filtre du pont d'interrupteurs électroniques commandés **36A.** Si la valeur d'inductance de fuite du transformateur est suffisamment importante, il est possible de se dispenser d'un composant discret, formant un composant spécifique, ou d'en limiter le dimensionnement. L'inductance **60** peut représenter un équivalent d'une telle inductance de fuite.

Dans l'exemple, le point intermédiaire **54** du bobinage primaire **36B1**, auquel le circuit capacitif **56** est relié, sépare le bobinage primaire en deux parties **36B11** et **36B12** d'égale inductance.

On remarque que, dans l'exemple illustré, tout le courant circulant dans le circuit capacitif **56**, entre le point intermédiaire **54** du bobinage primaire **36B1** du transformateur **36B** et le côté filtre du pont d'interrupteurs électroniques commandés **36A**, passe par la capacité **58**.

On note par ailleurs que le circuit capacitif **56**, ajouté à un pont complet traditionnel, ne comporte que des composants électriques passifs. Cependant, comme on le verra ci-dessous, il forme, avec les interrupteurs électroniques commandés habituels du pont d'interrupteurs électroniques commandés, un filtre actif particulièrement performant, ne nécessitant pas de composants électroniques à semi-conducteurs (diodes, MOSFET, IGBT, etc...) supplémentaires.

Chacun des interrupteurs électroniques commandés **51.1**, **51.2**, **52.1**, **52.2** du pont complet formant le convertisseur primaire alternatif-continu **36A,** est par exemple réalisé sous la forme d'un thyristor ou d'un IGBT à haute tension, et peut être commandé au moins vers un état ouvert et vers un état fermé. Le pont complet **36A** peut ainsi être configuré dans 4 modes.

Dans les deux modes de réalisation des **Figs. 3** et **6**, l'état de commutation ouvert ou fermé des interrupteurs commandés du pont complet du convertisseur primaire continu-alternatif **36A** permet de contrôler à quel côté, premier ou second, du pont complet sont reliées les deux bornes du bobinage primaire **36B1** du transformateur **36B.**

Le pont complet d'interrupteurs électriques commandés peut ainsi fonctionner selon un certain nombre de modes prédéfinis correspondant chacun à un état de commutation défini pour l'ensemble des interrupteurs électriques commandés. De manière connue, les états de commutations sont tels que, dans un bras donné, un des interrupteurs commandés du bras considéré est ouvert, interrompant tout courant électrique et un autre des interrupteurs commandés du bras considéré est fermé, laissant passer un courant électrique.

Deux modes sont qualifiés de « différentiels », car les bornes du bobinage primaire **36B1** sont alors reliées chacune à un côté différent du pont complet **36A.** Autrement dit, une des deux bornes du bobinage primaire **36B1** du transformateur **36B** est reliée à un côté du pont d'interrupteurs tandis que l'autre des deux bornes du bobinage primaire **36B1** du transformateur **36B** est reliée à l'autre côté du pont d'interrupteurs. Le bobinage primaire **36B1** se voit alors appliquer la tension intermédiaire continue qui est appliquée côté amont **361** du convertisseur primaire **36A**, dans un sens ou dans l'autre. Pour cela, dans le mode de réalisation de la **Fig. 3****,** on commande les interrupteurs de chaque bras de telle sorte que, dans un bras, un seul interrupteur est ouvert, l'interrupteur côté filtre étant ouvert pour un bras et fermé pour l'autre bras. Entre les deux modes différentiels **A** et **C**, il y a inversion du côté du pont auquel est reliée chaque borne du bobinage primaire **36B1.** Dans les deux modes différentiels **A** et **C**, la tension intermédiaire continue, ou son inverse, est appliquée au bobinage primaire du transformateur.

Dans un premier mode différentiel, illustré à la Fig. 4A, l'interrupteur côté filtre **51.2** du premier bras est ouvert et l'interrupteur côté opposé **51.1** de ce premier bras est fermé, tandis que l'interrupteur côté filtre **52.2** du second bras est fermé et l'interrupteur côté opposé **52.1** de ce second bras est ouvert. La tension appliquée aux bornes du bobinage primaire **36B1** du transformateur est la tension intermédiaire continue qui est appliquée côté amont **361** du convertisseur primaire **36A**.

Dans un second mode différentiel, illustré à la Fig. **4C**, l'interrupteur côté filtre **51.2** du premier bras est fermé et l'interrupteur côté opposé **51.1** de ce premier bras est ouvert, tandis que l'interrupteur côté filtre **52.2** du second bras est ouvert et l'interrupteur côté opposé **52.1** de ce second bras est fermé. La tension appliquée aux bornes du bobinage primaire **36B1** du transformateur est l'inverse de la tension intermédiaire continue qui est appliquée côté amont **361** du convertisseur primaire **36A**.

Pour ces deux modes différentiels, au moins une partie de la tension intermédiaire continue est appliquée au circuit capacitif **56**. Dans le cas où le point intermédiaire **54** de branchement du circuit capacitif **56** sépare le bobinage en deux parties d'inductance égale, c'est la moitié de la tension intermédiaire continue qui est appliquée au circuit capacitif **56**.

Deux modes sont qualifiés de « commun », car les bornes du bobinage primaire **36B1** sont alors reliées à un même côté **48**, **50** du pont complet **36A**.

Dans un premier mode commun, illustré à la Fig. **4B**, les interrupteurs côté filtre **51.2, 52.2** sont ouverts dans les deux bras **51**, **52**, tandis que les interrupteurs côté opposé **51.1, 52.1** sont fermés dans les deux bras **51**, **52**. Les bornes du bobinage primaire **36B1** sont alors reliées au côté opposé **48** du pont du convertisseur primaire **36A**, opposé par rapport au « coté filtre » du pont convertisseur primaire **36A**, auquel le circuit capacitif **56** est par ailleurs relié.

Dans un second mode commun, illustré à la Fig. **4D**, les interrupteurs côté filtre **51.2, 52.2** sont fermés dans les deux bras **51**, **52**, tandis que les interrupteurs côté opposé **51.1, 52.1** sont ouverts dans les deux bras **51**, **52**. Les bornes du bobinage primaire **36B1** sont alors reliées au « côté filtre » **50** du pont complet **36A**, par rapport au circuit capacitif **56**. De la sorte, le circuit capacitif **56** se trouve relié, par ses deux bornes opposées, au même côté filtre du pont convertisseur primaire **36A**, à savoir son « côté filtre ». Le circuit capacitif **56** est ainsi court-circuité.

Dans les deux modes communs, aucune tension n'est appliquée aux bornes du bobinage primaire **36B1** du transformateur, et le bobinage primaire **36B1** du transformateur est en réalité court-circuité par le pont d'interrupteurs, tout en étant porté au potentiel du côté du pont auquel il est alors relié.

Dans le premier mode commun, la tension intermédiaire continue est appliquée au circuit capacitif **56**. Dans le second mode commun, aucune tension n'est appliquée au circuit capacitif **56**, qui est court-circuité par le bobinage primaire et par le pont d'interrupteurs.

Comme on le verra dans la description du procédé selon l'invention qui suivra, il est possible de commander le pont complet d'interrupteurs électroniques commandés selon une boucle répétitive dans laquelle la boucle comprend une phase dans un des deux modes différentiels, puis une phase dans l'autre des deux modes différentiels, avec, entre deux phases successives en mode différentiel, au moins une phase de mode commun.

Un système embarqué de conversion **16** tel que décrit ci-dessus permet de mettre en oeuvre un procédé de conversion de puissance électrique sous moyenne tension dans un engin mobile de transport **10** pour alimenter un système de traction embarqué ayant au moins un moteur électrique de traction **20**.

Un tel procédé de conversion reçoit, en amont, une puissance électrique d'entrée sous une moyenne tension alternative d'entrée, par exemple par le biais du système de connexion électrique **22,** et délivre, en aval, une puissance électrique de traction sous une tension continue de traction.

Une tel procédé répartit la puissance électrique d'entrée entre plusieurs tranches de conversion **38.i** ayant un processus amont **34** de conversion de puissance alternative-continue qui délivre une puissance intermédiaire sous une tension intermédiaire continue. Dans le système **16** décrit plus haut, ce processus amont est mis en oeuvre notamment par l'étage amont de conversion de puissance alternative-continue **34** de chacune des tranches de conversion.

Ensuite, dans le procédé, on convertit, dans chaque tranche de conversion **38.i,** dans un processus aval de conversion de puissance continue-continue, la puissance intermédiaire sous la tension intermédiaire continue en la puissance électrique de traction sous la tension continue de traction. Ce processus aval est typiquement mis en oeuvre, dans chaque tranche de conversion, par l'étage aval de conversion de puissance continue-continue **36.**

Pour chaque tranche de conversion **38.i,** ce processus aval de conversion de puissance continue-continue comporte :
- Une routine primaire de conversion de puissance continue-alternative qui convertit la puissance électrique intermédiaire sous tension intermédiaire continue en une puissance d'entrée de couplage magnétique sous tension alternative. Cette routine primaire est, dans le système **16** décrit plus haut, mise en oeuvre grâce au convertisseur primaire continu-alternatif **36A.**
- Une routine de transfert par couplage magnétique avec isolation galvanique qui transfert la puissance d'entrée de couplage magnétique en une puissance de sortie de couplage magnétique sous tension alternative au travers d'un transformateur, par exemple tel que décrit ci-dessus, ayant un bobinage primaire comprenant deux bornes auxquelles sont appliquées la puissance d'entrée de couplage magnétique.
- Une routine secondaire de conversion **36C** de puissance alternative-continue qui convertit la puissance de sortie de couplage magnétique sous tension alternative en la puissance électrique de traction sous la tension continue de traction. Cette routine secondaire est, dans le système **16** décrit plus haut, mise en oeuvre grâce au convertisseur secondaire alternatif-continu **36C**.

Dans ce processus aval, la routine primaire de conversion de puissance continue-alternative est réalisée dans un pont d'interrupteurs électroniques **36A** tel que décrit plus haut, de telle sorte que la puissance d'entrée de couplage magnétique est prélevée entre le point milieu **51.3** du premier bras **51** et le point milieu **52.3** du second bras **52**.

Selon l'invention, pour chaque tranche de conversion **38.i**, dans la routine primaire de conversion de puissance continue-alternative, les interrupteurs électroniques commandés sont commandés alternativement selon une boucle répétitive comprenant :
- une phase de fonctionnement selon un premier mode différentiel **A**, dans lequel la tension intermédiaire continue est appliquée au bobinage primaire du transformateur et, au moins une partie de la tension intermédiaire continue est appliquée à un circuit capacitif qui s'étend entre un point intermédiaire du bobinage primaire et un côté du pont d'interrupteurs électroniques commandés ;
- et, successivement et alternativement avec la phase de fonctionnement selon le premier mode différentiel **A**, une phase de fonctionnement selon un second mode différentiel **C**, dans lequel l'inverse de la tension intermédiaire continue est appliquée au bobinage primaire du transformateur et, au moins une partie de la tension intermédiaire continue est appliquée au circuit capacitif.

Les phases de fonctionnement en modes différentiels sont les phases durant lesquelles la puissance d'entrée de couplage magnétique est transférée au travers du transformateur **36B**.

Par ailleurs, cette boucle répétitive comprend, entre deux occurrences successives de phases de fonctionnement selon un des deux modes différentiels, au moins une parmi les phases de fonctionnement selon un premier mode commun **B** dans lequel les deux bornes du bobinage primaire **36B1** sont court-circuitées en étant reliées à un même côté **48**, **50** du pont d'interrupteurs, le bobinage primaire **36B1** étant alors porté au potentiel de ce côté du pont d'interrupteurs. En fonction de la tension aux bornes de la capacité **58** au moment de la commutation dans le mode commun, un courant de charge ou de décharge de la capacité **58** peut apparaitre dans le circuit capacitif **56**. On peut ainsi identifier :
- une phase de fonctionnement selon un premier mode commun **B**, dans lequel une tension nulle est appliquée au bobinage primaire du transformateur en reliant ses deux bornes à un même côté du pont d'interrupteurs, et dans lequel une partie de la tension intermédiaire continue est appliquée au circuit capacitif ;
- une phase de fonctionnement selon un second mode commun **D**, dans lequel une tension nulle est appliquée au bobinage primaire du transformateur en reliant ses deux bornes à un même côté du pont d'interrupteurs, et dans lequel une tension nulle est appliquée au circuit capacitif.

Les phases de fonctionnement en mode commun permettent de transférer la puissance fluctuante vers la capacité **58** ou depuis la capacité **58**. La phase de premier mode commun **B** est utilisée pour stocker de l'énergie dans la capacité **58** et la phase de second mode commun **D** pour que la capacité **58** renvoie de l'énergie.

En effet, l'étage amont de conversion de puissance alternative-continue **34** envoie sur la connexion intermédiaire **40, 42** une puissance instantanée P34(t) qui a une valeur moyenne P34m et une composante fluctuante pf34(t), qui varie à deux fois la fréquence du réseau, avec donc P34(t) = P34m + pf34(t). La valeur moyenne P34m correspond à ce que l'étage aval **36** prélève sur la connexion intermédiaire **40, 42.** Le rôle de l'étage aval de conversion de puissance alternative-continue **36** est double. Dans des phases de fonctionnement en mode différentiel **A** et **C**, l'étage aval de conversion de puissance alternative-continue **36** transfère la valeur moyenne de puissance P34m au système de traction, au travers du transformateur **36B.** Dans des phases de fonctionnement en mode commun **B** et **D**, l'étage aval de conversion de puissance alternative-continue **36** stocke/restitue la puissance fluctuante, en l'occurrence dans la capacité **58**. De cette manière, le filtre électrique **46** agencé entre les pôles intermédiaires d'une tranche de conversion **38**, **38.1**,..., **38.n**, n'a plus, ou pratiquement plus à absorber de puissance, la tension à ses bornes reste constante.

La boucle répétitive est répétée à une fréquence de répétition qui est significativement supérieure à la fréquence de la moyenne tension alternative monophasée fournie par la source fixe de tension électrique de réseau, par exemple au moins 10 fois supérieure, voire au moins 50 fois supérieure. La fréquence de répétition est ainsi par exemple comprise entre quelques centaines de Hz, par exemple 500 Hz, et quelques dizaines de kHz, par exemple 50 kHz.

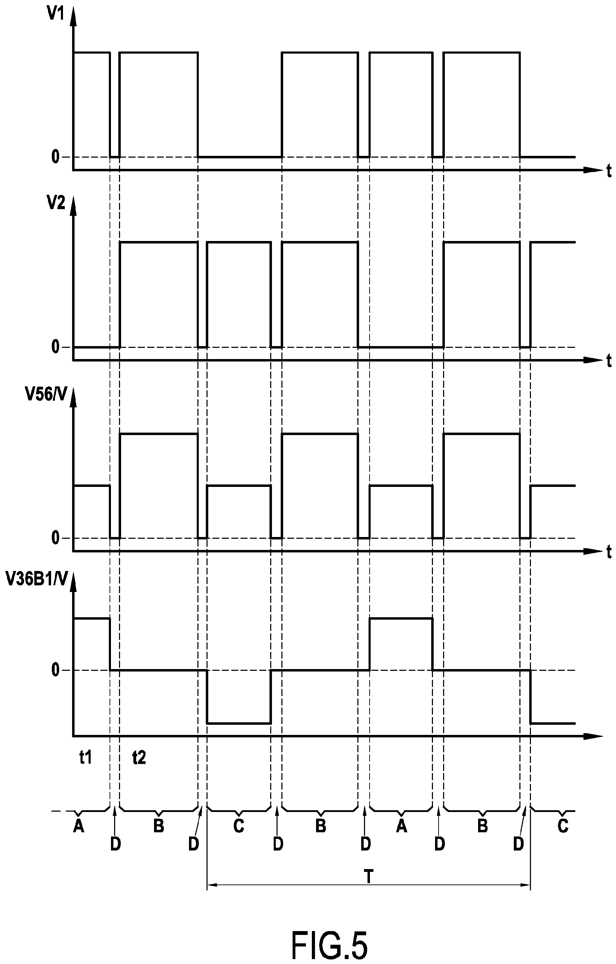

Dans l'exemple de procédé illustré à la Fig. 5, on peut voir que la boucle répétitive répète, dans l'ordre, la séquence de phases de fonctionnement suivante :
- premier mode différentiel **A** ;
- second mode commun **D** ;
- premier mode commun **B** ;
- second mode commun **D** ;
- second mode différentiel **C** ;
- second mode commun **D** ;
- premier mode commun **B** ;
- second mode commun **D.**

La boucle étant répétitive, elle a ainsi une période de répétition **T**, et le procédé continue immédiatement avec une nouvelle itération de la boucle.

D'autres séquences de phases de fonctionnement pourraient être prévues, par exemple en fonction de la puissance fluctuante à absorber. On pourra par ailleurs chercher à limiter les commutations des interrupteurs électroniques de puissance.

Les ratios entre les durées des différentes phases, notamment le ratio entre la durée totale, dans une boucle donnée, des phases de fonctionnement en mode commun **B** et **D**, et la durée totale, dans la boucle donnée, des phases de fonctionnement en mode différentiel **A** et **C**, peuvent dépendre en autres du dimensionnement du circuit capacitif **56**. Pour une période de répétition T d'une boucle donnée, plus la durée totale, dans la boucle donnée, des phases de fonctionnement en mode commun **B** et **D** est élevée, plus la durée totale, dans la boucle donnée, des phases de fonctionnement en mode différentiel **A** et **C** est courte, donc plus le courant dans le bobinage primaire **36B1** doit être élevé pour transférer la même puissance au secondaire.

La durée totale, dans la boucle donnée, des phases de fonctionnement en mode commun **B** et **D** doit cependant être suffisamment longue pour que le circuit capacitif **56** puisse gérer la puissance fluctuante.

On peut voir sur la **Fig. 5** qu'en augmentant la durée de la phase de fonctionnement en second mode commun **D** et en diminuant celle de la phase de fonctionnement en premier mode commun **B**, on peut conserver une valeur prédéfinie de la tension **V36B1** aux bornes du bobinage primaire **36B1,** tout en diminuant la valeur moyenne de la tension **V56** aux bornes du circuit capacitif **56**. De cette manière, on peut conserver une valeur prédéfinie de la puissance transmise par la connexion intermédiaire **40**, **42**, tout en déchargeant la capacité **58**.

Dans un exemple de fonctionnement en régime permanent, les durées des phases de fonctionnement en mode différentiel A et C sont inchangées, les durées des phases de fonctionnement en mode commun B et D sont légèrement modifiées lors de chaque période de répétition T pour changer la valeur moyenne de la tension **V56** aux bornes du circuit capacitif **56**. De cette manière, on transmet la même puissance au système de traction **18** et on contrôle la tension aux bornes du circuit capacitif **56**. Ainsi, on stocke de l'énergie dans ce circuit capacitif **56**, puis on la restitue. Quand on stocke, l'énergie vient de la connexion intermédiaire **40, 42.** On fait cela lorsque la puissance envoyée par l'étage amont est supérieure à la puissance moyenne (puissance fluctuante positive). Réciproquement, quand la puissance envoyée par l'étage amont est inférieure à la puissance moyenne (puissance fluctuante négative), on contrôle la tension aux bornes du circuit capacitif **56** pour qu'elle soit inférieure à la tension de la capacité **58** pour la décharger et que l'énergie qu'elle a stockée soit restituée au niveau de la connexion intermédiaire **40, 42.**

Un des avantages de l'invention est de permettre de diminuer le volume des filtres électriques 46 habituellement agencés entre les pôles intermédiaires **40, 42** des tranches de conversion **38,** en ajoutant une capacité **58** de valeur beaucoup plus faible et en adoptant une commande spécifique du convertisseur primaire continu-alternatif **36A.** La capacité **58** ajoutée est dimensionnée pour absorber la puissance fluctuante et voit une tension variable à la même fréquence que la puissance fluctuante, tandis que les filtres électriques **46** doivent voir une tension quasi constante. La tension que voit la capacité **58** est à la même fréquence que la puissance fluctuante. Il est possible de tolérer de beaucoup plus grandes variations de tensions aux bornes du circuit capacitif 56, donc du condensateur 58, que sur la connexion intermédiaire **40, 42.** Aussi, pour absorber une puissance fluctuante pf34 donnée, il est possible d'utiliser, dans le circuit capacitif **56**, une capacité **58** beaucoup plus petite que celle qui serait nécessaire pour absorber la même puissance au niveau des filtres électriques **46** habituellement agencés entre les pôles intermédiaires **40, 42** , pour lesquels les fluctuations de tension sont moins tolérables. Au total, la somme des capacités dans le circuit se trouve réduite par rapport à l'art antérieur.

L'invention propose ainsi un moyen de filtrage actif permettant de réduire de l'ondulation générée par la conversion alternatif monophasé-continu avec des composants passifs et sans nécessiter d'interrupteurs commandés supplémentaires, en exploitant le convertisseur primaire continu-alternatif **36A** de l'étage aval de conversion de puissance continue-continue isolé **36**, au bénéfice d'une réduction du coût, de l'encombrement et du risque de défaillance du système embarqué.

L'invention n'est pas limitée aux exemples décrits et représentés car diverses modifications peuvent y être apportées sans sortir de son cadre.

## Revendications

1. - Système embarqué de conversion de puissance électrique sous moyenne tension pour un engin mobile de transport (**10**) comportant un système de traction embarqué ayant au moins un moteur électrique de traction (**20**), du type dans lequel le système embarqué de conversion (**16**) :
- est embarqué dans l'engin mobile de transport (**10**) et délivre, en aval, une tension continue de traction au système de traction,
- est adapté pour être, lors d'un déplacement de l'engin mobile de transport, en contact mécanique et électrique avec un contact linéique fixe (**14**) relié à une source fixe de tension électrique de réseau, fournissant une moyenne tension alternative monophasée,
- comporte au moins un circuit de connexion électrique (**22**) comprenant, en amont, au moins un contact embarqué (**24**) capable de venir en contact mécanique et électrique avec le contact linéique fixe (**14**),
- comporte plusieurs tranches de conversion (**38.i**) ayant chacune un étage amont (**34**) de conversion de puissance alternative-continue relié électriquement, par un côté amont, au circuit de connexion (**22**),
- comporte, pour chaque tranche de conversion (**38.i**), entre l'étage amont (**34**) de conversion de puissance alternative-continue et le système de traction (**18**), un étage aval (**36**) de conversion de puissance continue-continue isolé, l'étage amont de conversion de puissance alternative-continue et l'étage aval de conversion de puissance continue-continue isolé de chaque tranche de conversion étant reliés l'un à l'autre, respectivement par un côté amont et par un côté aval, au niveau d'une connexion intermédiaire **(40.i, 42.i)** sous tension continue, la connexion intermédiaire comprenant un premier pôle intermédiaire (**40.i**) et un second pôle intermédiaire (**42.i**) ;
du type dans lequel, pour chaque tranche de conversion (**38.i**), l'étage aval de conversion de puissance continue-continue isolé (**36**) est réalisé sous la forme de l'association :
∘ en amont, d'un convertisseur primaire continu-alternatif (**36A**) ayant un côté amont continu, formant le côté amont (**361**) de l'étage aval de conversion de puissance continue-continue isolé (**36**), et un côté aval alternatif;
∘ d'un transformateur (**36B**) ayant un bobinage primaire (**36B1**), connecté au côté aval du convertisseur primaire et un bobinage secondaire ;
∘ en aval, un convertisseur secondaire (**36C**) ayant un côté amont alternatif connecté au bobinage secondaire du transformateur, et un côté aval continu qui forme le côté aval (**362**) de l'étage aval de conversion de puissance continue-continue isolé (**36**),
et du type dans lequel, le convertisseur primaire continu-alternatif (**36A**) est réalisé sous la forme d'un pont complet d'interrupteurs électroniques commandés (**51.1**, **51.11**, **51.12**, **51.2**, **51.21**, **51.22**, **52.1**, **52.11**, **52.12**, **52.2**, **52.21**, **52.22**) ayant :
- un premier côté (**48**) relié au premier pôle intermédiaire (**40.i**) de la connexion intermédiaire et un second côté (**50**) relié au second pôle intermédiaire (**42.i**) de la connexion intermédiaire ;
- un premier bras (**51**) entre le premier côté (**48**) et le second côté (**50**) et comportant au moins un premier (**51.1**, **51.11**, **51.12**) et au moins un second (**51.2**, **51.21**, **51.22**) interrupteurs électroniques commandés, agencés successivement dans le premier bras, avec un point milieu (**51.3**) entre les deux ;
- au moins un second bras (**52**), parallèle au premier bras (**51**) entre le premier côté et le second côté, et comportant au moins un premier (**52.1**, **52.11**, **52.12**) et au moins un second (**52.2**, **52.21**, **52.22**) interrupteurs électroniques commandés, agencés successivement dans le second bras, avec un point milieu (**52.3**) entre les deux ;
de telle sorte que la puissance d'entrée de couplage magnétique est prélevée entre le point milieu (**51.3**) du premier bras (**51**) et le point milieu (**52.3**) du second bras (**52**),
**caractérisé en ce que**, pour chaque tranche de conversion (**38.i**),
- le bobinage primaire (**36B1**) du transformateur (**36B**) de l'étage aval de conversion de puissance continue-continue isolé (**36**) présente un point intermédiaire (**54**), entre une première partie (**36B11**) et une seconde partie (**36B12**) du bobinage primaire qui sont électriquement successives ;
- le convertisseur primaire continu-alternatif (**36A**) comporte un circuit capacitif (**56**) interposé électriquement entre le point intermédiaire (**54**) du bobinage primaire du transformateur (**36B**) et un des deux côtés (**48**, **50**) du pont d'interrupteurs électroniques commandés du convertisseur primaire continu-alternatif (**36A**).

2. - Système embarqué de conversion de puissance pour un engin mobile de transport selon la revendication **1**, **caractérisé en ce que** le circuit capacitif (56) interposé comporte, en série, une inductance (**60**).

3. - Système embarqué de conversion de puissance pour un engin mobile de transport selon l'une des revendications **1** ou **2**, **caractérisé en ce que** les étages amont de conversion de puissance alternative-continue (**34**) sont connectés électriquement en série, par leur côté amont (**341**), dans le circuit de connexion (**22**).

4. - Système embarqué de conversion de puissance pour un engin mobile de transport selon l'une quelconque des revendications précédentes, **caractérisé en ce que** plusieurs des, ou tous les étages aval de conversion de puissance continue-continue isolés (**36**) sont connectés entre eux électriquement en parallèle par leur côté aval (**362**).

5. - Système embarqué de conversion de puissance pour un engin mobile de transport selon l'une quelconque des revendications précédentes, **caractérisé en ce que** au moins deux tranches de conversion (**38.i**) ont chacune un étage aval de conversion de puissance continue-continue isolé (**36)** qui partage, avec l'autre étage aval de conversion de puissance continue-continue isolé (**36**), le convertisseur secondaire (**36C**) et le bobinage secondaire du transformateur (**36B**), tout en ayant chacun leur propre convertisseur primaire (**36A**).

6. - Système embarqué de conversion de puissance pour un engin mobile de transport selon l'une quelconque des revendications précédentes, **caractérisé en ce que** le système (**16**) est réversible pour transmettre de la puissance électrique, dans un sens moteur, de la source de tension vers le système de traction (**18**) et, dans un sens inverse générateur, du système de traction (**18**) vers la source de tension.

7. - Procédé de conversion de puissance électrique sous moyenne tension dans un engin mobile de transport (**10**) pour alimenter un système de traction embarqué ayant au moins un moteur électrique de traction (**20**), du type dans lequel le procédé de conversion (**16**) :
- délivre, en aval, une puissance électrique de traction sous une tension continue de traction,
- reçoit, en amont, une puissance électrique d'entrée sous une moyenne tension alternative d'entrée monophasée,
- répartit la puissance électrique d'entrée entre plusieurs tranches de conversion (**38.i**) ayant un processus amont (**34**) de conversion de puissance alternative-continue qui délivre une puissance intermédiaire sous une tension intermédiaire continue,
- convertit, dans chaque tranche de conversion (**38.i**), dans un processus aval (**36**) de conversion de puissance continue-continue, la puissance intermédiaire sous la tension intermédiaire continue en la puissance électrique de traction sous la tension continue de traction,
du type dans lequel, pour chaque tranche de conversion (**38.i**), le processus aval de conversion de puissance continue-continue (**36**) comporte :
∘ une routine primaire de conversion de puissance continue-alternative (**36A**) qui convertit la puissance électrique intermédiaire sous tension intermédiaire continue en une puissance d'entrée de couplage magnétique sous tension alternative;
∘ une routine de transfert par couplage magnétique avec isolation galvanique (**36B**) qui transfert la puissance d'entrée de couplage magnétique en une puissance de sortie de couplage magnétique sous tension alternative au travers d'un transformateur ayant un bobinage primaire (**36B1**) comprenant deux bornes auxquelles est appliquée la puissance d'entrée de couplage magnétique ;
∘ une routine secondaire de conversion (**36C**) de puissance alternative-continue qui convertit la puissance de sortie de couplage magnétique sous tension alternative en la puissance électrique de traction sous la tension continue de traction ;
et du type dans lequel, la routine primaire de conversion de puissance continue-alternative (**36A**) est réalisé dans un pont complet d'interrupteurs électroniques commandés ayant :
- un premier côté et un second côté entre lesquels est appliquée la tension intermédiaire ;
- un premier bras (**51**) entre le premier côté (**48**) et le second côté (**50**) et comportant au moins un premier (**51.1**, **51.11, 51.12**) et au moins un second (**51.2**, **51.21, 51.22**) interrupteurs électroniques commandés, agencés successivement dans le premier bras, avec un point milieu (**51.3**) entre les deux ;
- et au moins un second bras (**52**), parallèle au premier bras (**51**) entre le premier côté et le second côté, et comportant au moins un premier (**52.1**, **52.11, 52.12**) et au moins un second (**52.2**, **52.21, 52.22**) interrupteurs électroniques commandés, agencés successivement dans le second bras, avec un point milieu (**52.3**) entre les deux ;
de telle sorte que la puissance d'entrée de couplage magnétique est prélevée entre le point milieu (**51.3**) du premier bras (**51**) et le point milieu (**52.3**) du second bras (**52**),
**caractérisé en ce que**, pour chaque tranche de conversion (**38.i**), dans la routine primaire de conversion de puissance continue-alternative (**36A**) les interrupteurs électroniques commandés sont commandés alternativement selon une boucle répétitive comprenant :
∘ une phase de fonctionnement selon un premier mode différentiel (**A**), dans lequel la tension intermédiaire continue est appliquée au bobinage primaire du transformateur et, au moins une partie de la tension intermédiaire continue est appliquée à un circuit capacitif (**56**) qui s'étend entre un point intermédiaire (**54**) du bobinage primaire (**36B1**) et un des deux côtés (**48**, **50**) du pont d'interrupteurs électroniques commandés ;
∘ et, successivement et alternativement avec une phase de fonctionnement selon le premier mode différentiel (**A**), une phase de fonctionnement selon un second mode différentiel (**C**), dans lequel l'inverse de la tension intermédiaire continue est appliquée au bobinage primaire du transformateur et, au moins une partie de la tension intermédiaire continue est appliquée au circuit capacitif ;
et comprenant, entre deux phases successives de fonctionnement selon un mode différentiel, au moins une parmi :
∘ une phase de fonctionnement selon un premier mode commun (**B**), dans lequel une tension nulle est appliquée au bobinage primaire du transformateur en reliant ses deux bornes à un même côté du pont d'interrupteurs, et dans lequel une partie de la tension intermédiaire continue est appliquée au circuit capacitif ;
∘ une phase de fonctionnement selon un second mode commun (**D**), dans lequel une tension nulle est appliquée au bobinage primaire du transformateur en reliant ses deux bornes à un même côté du pont d'interrupteurs, et dans lequel une tension nulle est appliquée au circuit capacitif.

8. - Procédé de conversion selon **la revendication 7, caractérisé en ce que** la boucle répétitive est répétée à une fréquence de répétition au moins 10 fois supérieure à la fréquence de la moyenne tension alternative monophasée fournie par source fixe de tension électrique de réseau, de préférence au moins 50 fois supérieure.

9. - Procédé de conversion selon l'une des revendications **7 ou 8, caractérisé en ce que** la boucle répétitive est répétée à une fréquence de répétition comprise entre 500 Hz et 50 kHz.

10. - Procédé de conversion selon l'une quelconque des revendications 8 ou **9**, **caractérisé en ce que** la boucle répétitive répète, dans l'ordre, la séquence de phases de fonctionnement suivante :
- premier mode différentiel (A) ;
- second mode commun (**D**) ;
- premier mode commun (**B**) ;
- second mode commun (**D**) ;
- second mode différentiel (**C**) ;
- second mode commun (**D**) ;
- premier mode commun (**B**) ;
- second mode commun (**D**).

## Patentansprüche

1. Bordeigenes System zur Umwandlung von elektrischer Leistung unter Mittelspannung für ein mobiles Transportfahrzeug (10), umfassend ein bordeigenes Antriebssystem mit wenigstens einem elektrischen Antriebsmotor (20), von dem Typ, bei dem das bordeigene Umwandlungssystem (16):
- sich an Bord des mobilen Transportfahrzeugs (10) befindet und dem Antriebssystem stromabwärts eine Antriebsgleichspannung liefert,
- geeignet ist, während einer Bewegung des mobilen Transportfahrzeugs in mechanischem und elektrischem Kontakt mit einem festen linearen Kontakt (14) zu stehen, der mit einer festen Netzspannungsquelle verbunden ist, die eine einphasige mittlere Wechselspannung liefert,
- wenigstens eine elektrische Verbindungsschaltung (22) umfasst, die stromaufwärts wenigstens einen Bordkontakt (24) umfasst, der in der Lage ist, in mechanischen und elektrischen Kontakt mit dem festen linearen Kontakt (14) zu kommen,
- mehrere Umwandlungsabschnitte (38.i) umfasst, die jeweils eine vorgeschaltete Stufe (34) zur AC-DC-Leistungsumwandlung aufweisen, die über eine stromaufwärtige Seite mit der Verbindungsschaltung (22) elektrisch verbunden ist,
- für jeden Umwandlungsabschnitt (38.i) zwischen der vorgeschalteten Stufe (34) zur AC-DC-Leistungsumwandlung und dem Antriebssystem (18) eine isolierte nachgeschaltete Stufe (36) zur DC-DC-Leistungsumwandlung umfasst, wobei die vorgeschaltete Stufe zur AC-DC-Leistungsumwandlung und die isolierte nachgeschaltete Stufe zur DC-DC-Leistungsumwandlung eines jeden Umwandlungsabschnitts jeweils durch eine stromaufwärtige Seite und durch eine stromabwärtige Seite im Bereich einer Zwischenverbindung (40.i, 42 .i) unter Gleichspannung miteinander verbunden sind, wobei die Zwischenverbindung einen ersten Zwischenpol (40.i) und einen zweiten Zwischenpol (42.i) umfasst;
von dem Typ, bei dem für jeden Umwandlungsabschnitt (38.i) die isolierte nachgeschaltete Stufe zur DC-DC-Leistungsumwandlung (36) in Form der Kombination ausgeführt ist:
∘ stromaufwärts aus einem DC-AC-Primärwandler (36A) mit einer stromaufwärtigen DC-Seite, welche die stromaufwärtige Seite (361) der isolierten nachgeschalteten Stufe zur DC-DC-Leistungsumwandlung (36) bildet, und einer stromabwärtigen AC-Seite,
∘ aus einem Transformator (36B) mit einer Primärwicklung (36B1), die mit der stromabwärtigen Seite des Primärwandlers verbunden ist, und einer Sekundärwicklung,
∘ stromabwärts einem Sekundärwandler (36C) mit einer stromaufwärtigen AC-Seite, die mit der Sekundärwicklung des Transformators verbunden ist, und einer stromabwärtigen DC-Seite, welche die stromabwärtige Seite (362) der isolierten nachgeschalteten Stufe zur DC-DC-Leistungsumwandlung (36) bildet,
und von dem Typ, bei dem der DC-AC-Primärwandler (36A) in Form einer vollständigen Brücke gesteuerter elektronischer Schalter (51.1, 51.11, 51.12, 51.2, 51.21, 51.22, 52.1, 52.11, 52.12, 52.2, 52.21, 52.22) ausgeführt ist, mit:
- einer ersten Seite (48), die mit dem ersten Zwischenpol (40.i) der Zwischenverbindung verbunden ist, und einer zweiten Seite (50), die mit dem zweiten Zwischenpol (42.i) der Zwischenverbindung verbunden ist,
- einem ersten Arm (51) zwischen der ersten Seite (48) und der zweiten Seite (50) und umfassend wenigstens einen ersten (51.1, 51.11, 51.12) und wenigstens einen zweiten (51.2, 51.21, 51.22) gesteuerten elektronischen Schalter, die in dem ersten Arm nacheinander angeordnet sind, mit einem Mittelpunkt (51.3) zwischen beiden,
- wenigstens einem zweiten Arm (52) parallel zum ersten Arm (51) zwischen der ersten Seite und der zweiten Seite, und umfassend wenigstens einen ersten (52.1, 52.11, 52.12) und wenigstens einen zweiten (52.2, 52.21, 52.22) gesteuerten elektronischen Schalter, die in dem zweiten Arm nacheinander angeordnet sind, mit einem Mittelpunkt (52.3) zwischen beiden,
derart, dass die Eingangsleistung zur magnetischen Kopplung zwischen dem Mittelpunkt (51.3) des ersten Arms (51) und dem Mittelpunkt (52.3) des zweiten Arms (52) entnommen wird,
**dadurch gekennzeichnet, dass** für jeden Umwandlungsabschnitt (38.i)
- die Primärwicklung (36B1) des Transformators (36B) der isolierten nachgeschalteten Stufe zur DC-DC-Leistungsumwandlung (36) einen Zwischenpunkt (54) zwischen einem ersten Teil (36B11) und einem zweiten Teil (36B12) der Primärwicklung, welche elektrisch aufeinanderfolgend sind, aufweist,
- der DC-AC-Primärwandler (36A) eine kapazitive Schaltung (56) umfasst, die zwischen dem Zwischenpunkt (54) der Primärwicklung des Transformators (36B) und einer der beiden Seiten (48, 50) der Brücke von gesteuerten elektronischen Schaltern des DC-AC-Primärwandlers (36A) elektrisch zwischengeschaltet ist.

2. Bordeigenes System zur Leistungsumwandlung für ein mobiles Transportfahrzeug nach Anspruch 1, **dadurch gekennzeichnet, dass** die zwischengeschaltete kapazitive Schaltung (56) in Reihe eine Induktivität (60) umfasst:

3. Bordeigenes System zur Leistungsumwandlung für ein mobiles Transportfahrzeug nach einem der Ansprüche 1 oder 2, **dadurch gekennzeichnet, dass** die vorgeschalteten Stufen zur AC-DC-Leistungsumwandlung (34) über ihre stromaufwärtige Seite (341) in der Verbindungsschaltung (22) elektrisch in Reihe geschaltet sind.

4. Bordeigenes System zur Leistungsumwandlung für ein mobiles Transportfahrzeug nach einem der vorhergehenden Ansprüche, **dadurch gekennzeichnet, dass** mehrere der oder alle isolierten nachgeschalteten Stufen zur DC-DC-Leistungsumwandlung (36) über ihre stromabwärtige Seite (362) untereinander elektrisch parallel geschaltet sind.

5. Bordeigenes System zur Leistungsumwandlung für ein mobiles Transportfahrzeug nach einem der vorhergehenden Ansprüche, **dadurch gekennzeichnet, dass** wenigstens zwei Umwandlungsabschnitte (38.i) jeweils eine isolierte nachgeschaltete Stufe zur DC-DC-Leistungsumwandlung (36) aufweisen, die mit der anderen isolierten nachgeschalteten Stufe zur DC-DC-Leistungsumwandlung (36) den Sekundärwandler (36C) und die Sekundärwicklung des Transformators (36B) teilt, wobei jede ihren eigenen Primärwandler (36A) hat.

6. Bordeigenes System zur Leistungsumwandlung für ein mobiles Transportfahrzeug nach einem der vorhergehenden Ansprüche, **dadurch gekennzeichnet, dass** das System (16) umkehrbar ist, um elektrische Leistung in einer Antriebsrichtung von der Spannungsquelle zu dem Antriebssystem (18) und in einer entgegengerichteten Erzeugungsrichtung von dem Antriebssystem (18) zur Spannungsquelle zu übertragen.

7. Verfahren zur Umwandlung von elektrischer Leistung unter Mittelspannung in einem mobilen Transportfahrzeug (10), um ein bordeigenes Antriebssystem mit wenigstens einem elektrischen Antriebsmotor (20) zu versorgen, von dem Typ, bei dem das Umwandlungsverfahren:
- stromabwärts eine elektrische Antriebsleistung unter einer Antriebsgleichspannung liefert,
- stromaufwärts eine elektrische Eingangsleistung unter einer einphasigen mittleren Eingangswechselspannung empfängt,
- die elektrische Eingangsleistung auf mehrere Umwandlungsabschnitte (38.i) verteilt, die einen vorgeschalteten Prozess (34) zur AC-DC-Leistungsumwandlung haben, der eine Zwischenleistung unter einer Zwischengleichspannung liefert,
- in jedem Umwandlungsabschnitt (38.i) in einem nachgeschalteten Prozess (36) zur DC-DC-Leistungsumwandlung die Zwischenleistung unter der Zwischengleichspannung in die elektrische Antriebsleistung unter der Antriebsgleichspannung umwandelt,
von dem Typ, bei dem der nachgeschaltete Prozess (36) zur DC-DC-Leistungsumwandlung für jeden Umwandlungsabschnitt (38.i) umfasst:
o eine Primärroutine zur DC-AC-Leistungsumwandlung (36A), welche die elektrische Zwischenleistung unter Zwischengleichspannung in eine Eingangsleistung zur magnetischen Kopplung unter Wechselspannung umwandelt,
o eine Routine zur Übertragung durch magnetische Kopplung mit galvanischer Trennung (36B), welche die Eingangsleistung zur magnetischen Kopplung in eine Ausgangsleistung zur magnetischen Kopplung unter Wechselspannung über einen Transformator mit einer Primärwicklung (36B1) mit zwei Anschlüssen überträgt, an denen die Eingangsleistung zur magnetischen Kopplung angelegt ist,
∘ eine Sekundärroutine zur AC-DC-Leistungsumwandlung (36C), welche die Ausgangsleistung zur magnetischen Kopplung unter Wechselspannung in die elektrische Antriebsleistung unter der Antriebsgleichspannung umwandelt,
und von dem Typ, bei dem die Primärroutine zur DC-AC-Leistungsumwandlung (36A) in einer vollständigen Brücke von gesteuerten elektronischen Schaltern ausgeführt ist, mit:
- einer ersten Seite und einer zweiten Seite zwischen den die Zwischenspannung angelegt ist,
- einem ersten Arm (51) zwischen der ersten Seite (48) und der zweiten Seite (50) und umfassend wenigstens einen ersten (51.1, 51.11, 51.12) und wenigstens einen zweiten (51.2, 51.21, 51.22) gesteuerten elektronischen Schalter, die in dem ersten Arm nacheinander angeordnet sind, mit einem Mittelpunkt (51.3) zwischen beiden,
- und wenigstens einem zweiten Arm (52) parallel zum ersten Arm (51) zwischen der ersten Seite und der zweiten Seite, und umfassend wenigstens einen ersten (52.1, 52.11, 52.12) und wenigstens einen zweiten (52.2, 52.21, 52.22) gesteuerten elektronischen Schalter, die in dem zweiten Arm nacheinander angeordnet sind, mit einem Mittelpunkt (52.3) zwischen beiden,
derart, dass die Eingangsleistung zur magnetischen Kopplung zwischen dem Mittelpunkt (51.3) des ersten Arms (51) und dem Mittelpunkt (52.3) des zweiten Arms (52) entnommen wird,
**dadurch gekennzeichnet, dass** für jeden Umwandlungsabschnitt (38.i) in der Primärroutine zur DC-AC-Leistungsumwandlung (36A) die gesteuerten elektronischen Schalter in einer sich wiederholenden Schleife abwechselnd angesteuert werden, die umfasst:
∘ eine Betriebsphase gemäß einem ersten Gegentakt (A), wobei die Zwischengleichspannung an die Primärwicklung des Transformators angelegt wird und wenigstens ein Teil der Zwischengleichspannung an eine kapazitive Schaltung (56) angelegt wird, die sich zwischen einem Zwischenpunkt (54) der Primärwicklung (36B1) und einer der beiden Seiten (48, 50) der Brücke von gesteuerten elektronischen Schaltern erstreckt,
∘ und nacheinander sowie abwechselnd mit einer Betriebsphase gemäß dem ersten Gegentakt (A), eine Betriebsphase gemäß einem zweiten Gegentakt (C), wobei der Kehrwert der Zwischengleichspannung an die Primärwicklung des Transformators angelegt wird und wenigstens ein Teil der Zwischengleichspannung an die kapazitive Schaltung angelegt wird,
und umfassend, zwischen zwei aufeinanderfolgenden Betriebsphasen gemäß einem Gegentakt, wenigstens eine von:
o einer Betriebsphase gemäß einem ersten Gleichtakt (B), wobei eine Nullspannung an die Primärwicklung des Transformators angelegt wird, indem seine beiden Anschlüsse mit einer gleichen Seite der Schalterbrücke verbunden werden, und wobei ein Teil der Zwischengleichspannung an die kapazitive Schaltung angelegt wird,
o einer Betriebsphase gemäß einem zweiten Gleichtakt (D), wobei eine Nullspannung an die Primärwicklung des Transformators angelegt wird, indem seine beiden Anschlüsse mit einer gleichen Seite der Schalterbrücke verbunden werden, und wobei eine Nullspannung an die kapazitive Schaltung angelegt wird.

8. Umwandlungsverfahren nach Anspruch 7, **dadurch gekennzeichnet, dass** die sich wiederholende Schleife mit einer Wiederholungsfrequenz wiederholt wird, die wenigstens 10 Mal größer ist als die Frequenz der einphasigen mittleren Wechselspannung, die von einer festen Netzspannungsquelle geliefert wird, vorzugsweise wenigstens 50 Mal größer.

9. Umwandlungsverfahren nach einem der Ansprüche 7 oder 8, **dadurch gekennzeichnet, dass** die sich wiederholende Schleife mit einer Wiederholungsfrequenz im Bereich zwischen 500 Hz und 50 kHz wiederholt wird.

10. Umwandlungsverfahren nach einem der Ansprüche 8 oder 9, **dadurch gekennzeichnet, dass** die sich wiederholende Schleife der Reihe nach die folgende Abfolge von Betriebsphasen wiederholt:
- erster Gegentakt (A) ;
- zweiter Gleichtakt (D),
- erster Gleichtakt (B),
- zweiter Gleichtakt (D),
- zweiter Gegentakt (C),
- zweiter Gleichtakt (D),
- erster Gleichtakt (B),
- zweiter Gleichtakt (D).

## Claims

1. An integrated system of medium-voltage electrical power conversion for a mobile item of transportation machinery (10) including an integrated traction system having at least one electrical traction motor (20), of the type in which the integrated conversion system (16):
- is integrated in the mobile item of transportation machinery (10) and delivers, downstream, a DC traction voltage to the traction system,
- is suitable for being, when the mobile item of transportation machinery is moved, in mechanical and electrical contact with a fixed line contact (14) connected to a fixed source of mains electrical voltage, supplying a single-phase AC input medium voltage,
- includes at least one electrical connection circuit (22) comprising, upstream, at least one integrated contact (24) capable of coming into mechanical and electrical contact with the fixed line contact (14),
- includes several conversion sections (38.i) each having an upstream AC-DC power conversion stage (34) electrically connected, by an upstream side, to the connection circuit (22),
- includes, for each conversion section (38.i), between the upstream AC-DC power conversion stage (34) and the traction system (18), a downstream isolated DC-DC power conversion stage (36), the upstream AC-DC power conversion stage and the downstream isolated DC-DC power conversion stage of each conversion section being connected to one another, respectively, by an upstream side and by a downstream side, at the level of an intermediate connection (40.i, 42.i) running on DC voltage, the intermediate connection comprising a first intermediate pole (40.i) and a second intermediate pole (42.i);
of the type wherein, for each conversion section (38.i), the downstream isolated DC-DC power conversion stage (36) is embodied by the association:
∘ upstream, of a Primary DC-AC converter (36A) having a DC upstream side, forming the upstream side (361) of the downstream isolated DC-DC power conversion stage (36), and an AC downstream side;
∘ a transformer (36B) having a primary winding (36B1), connected to the downstream side of the primary converter and a secondary winding;
∘ downstream, a secondary converter (36C) having an upstream AC side connected to the secondary winding of the transformer, and a downstream DC side which forms the downstream side (362) of the downstream isolated DC-DC power conversion stage (36),
and of the type wherein, the primary DC-AC converter (36A) is embodied as a full bridge of controlled electronic switches (51.1, 51.11, 51.12, 51.2, 51.21, 51.22, 52.1, 52.11, 52.12, 52.2, 52.21, 52.22) having:
- a first side (48) connected to the first intermediate pole (40.i) of the intermediate connection and a second side (50) connected to the second intermediate pole (42.i) of the intermediate connection;
- a first arm (51) between the first side (48) and the second side (50) and including at least a first (51.1, 51.11, 51.12) and at least a second (51.2, 51.21, 51.22) controlled electronic switches, arranged successively in the first arm, with a midpoint (51.3) between the two;
- at least a second arm (52), parallel to the first arm (51) between the first side and the second side, and including at least a first (52.1, 52.11, 52.12) and at least a second (52.2, 52.21, 52.22) controlled electronic switches, successively arranged in the second arm, with a midpoint (52.3) between the two;
such that the magnetic coupling input power is drawn between the midpoint (51.3) of the first arm (51) and the midpoint (52.3) of the second arm (52),
**characterized in that**, for each conversion section (38.i),
- the primary winding (36B1) of the transformer (36B) of the downstream isolated DC-DC power conversion stage (36) has an intermediate point (54), between a first part (36B11) and a second part (36B12) of the primary winding which are electrically successive;
- the primary DC-AC converter (36A) includes a capacitive circuit (56) electrically interposed between the intermediate point (54) of the primary winding of the transformer (36B) and one side of both sides (48, 50) of the bridge of controlled electronic switches of the Primary DC-AC converter (36A).

2. An integrated system of power conversion for a mobile item of transportation machinery as claimed in claim 1, **characterized in that** the interposed capacitive circuit (56) includes, in series, an inductance (60).

3. An integrated system of power conversion for a mobile item of transportation machinery as claimed in one of claims 1 or 2, **characterized in that** the upstream AC-DC power conversion stages (34) are electrically connected in series, by their upstream side (341), in the connection circuit (22).

4. An integrated system of power conversion for a mobile item of transportation machinery as claimed in any of the preceding claims, **characterized in that** several, or all, of the downstream isolated DC-DC power conversion stages (36) are electrically connected to one another in parallel by their downstream side (362).

5. An integrated system of power conversion for a mobile item of transportation machinery as claimed in any of the preceding claims, **characterized in that** at least two conversion sections (38.i) each have a downstream isolated DC-DC power conversion stage (36) which shares, with the other downstream isolated DC-DC power conversion stage (36), the secondary converter (36C) and the secondary winding of the transformer (36B), while each having their own primary converter (36A).

6. An integrated system of power conversion for a mobile item of transportation machinery as claimed in any of the preceding claims, **characterized in that** the system (16) is reversible for transmitting electrical power, in one motive direction, from the voltage source toward the traction system (18) and, in a reverse generative direction, from the traction system (18) toward the voltage source.

7. A method of medium-voltage electrical power conversion for a mobile item of transportation machinery (10) for supplying an integrated traction system having at least one electrical traction motor (20), of the type in which the conversion method (16):
- delivers, downstream, an electrical tractive power running on a DC traction voltage,
- receives, upstream, an input electrical power running on a single-phase AC input medium voltage,
- distributes the input electrical power between several conversion sections (38.i) have an upstream AC-DC power conversion process (34) which delivers an intermediate power running on a DC intermediate voltage,
- converts, in each conversion section (38.i), in a downstream DC-DC power conversion process (36), the intermediate power running on the DC intermediate voltage into the tractive electrical power on the DC traction voltage,
of the type wherein, for each conversion section, (38.i), the downstream DC-DC power conversion process (36) includes:
∘ a primary DC-AC power conversion routine (36A) which converts the intermediate electrical power running on DC intermediate voltage into a magnetic coupling input power running on AC voltage;
∘ a routine of transfer by magnetic coupling with galvanic isolation (36B) which transfers the magnetic coupling input power into a magnetic coupling output power running on AC voltage via a transformer having a primary winding (36B1) comprising two terminals to which the magnetic coupling input power is applied;
∘ a secondary AC-DC power conversion routine (36C) which converts the magnetic coupling output power running on AC voltage into a traction power running on the DC traction voltage;
and of the type wherein, the primary DC-AC power conversion routine (36A) is embodied in a full bridge of controlled electronic switches having:
- a first side and a second side between which the intermediate voltage is applied;
- a first arm (51) between the first side (48) and the second side (50) and including at least a first (51.1, 51.11, 51.12) and at least a second (51.2, 51.21, 51.22) controlled electronic switches, arranged successively in the first arm, with a midpoint (51.3) between the two;
- and at least a second arm (52), parallel to the first arm (51) between the first side and the second side, and including at least a first (52.1, 52.11, 52.12) and at least a second (52.2, 52.21, 52.22) controlled electronic switches, successively arranged in the second arm, with a midpoint (52.3) between the two;
such that the magnetic coupling input power is drawn between the midpoint (51.3) of the first arm (51) and the midpoint (52.3) of the second arm (52),
**characterized in that**, for each conversion section (38.i), in the primary DC-AC power conversion routine (36A) the controlled electronic switches are controlled in alternation in a repetitive loop comprising:
∘ a phase of operation in a first differential mode (A), wherein the DC intermediate voltage is applied to the primary winding of the transformer and at least a part of the DC intermediate voltage is applied to a capacitive circuit (56) extending between an intermediate point (54) of the primary winding (36B1) and one side of both sides (48, 50) of the bridge of controlled electronic switches;
∘ and, successively and in alternation with a phase of operation in the first differential mode (A), a phase of operation in a second differential mode (C), wherein the inverse of the DC intermediate voltage is applied to the primary winding of the transformer and at least a part of the DC intermediate voltage is applied to the capacitive circuit;
and comprising, between two successive phases of operation in a differential mode, at least from among:
∘ a phase of operation in a first common mode (B), wherein a zero voltage is applied to the primary winding of the transformer by connecting its two terminals to one and the same side of the bridge of switches, and wherein a part of the DC intermediate voltage is applied to the capacitive circuit;
∘ a phase of operation in a second common mode (D), wherein a zero voltage is applied to the primary winding of the transformer by connecting its two terminals to one and the same side of the bridge of switches, and wherein a zero voltage is applied to the capacitive circuit.

8. The conversion method as claimed in claim 7, **characterized in that** the repetitive loop is repeated at a frequency of repetition at least 10 times greater than the frequency of the single-phase AC medium voltage supplied by a fixed source of mains voltage, preferably at least 50 times greater.

9. The conversion method as claimed in one of claims 7 or 8, **characterized in that** the repetitive loop is repeated at a frequency of repetition between 500 Hz and 50 kHz.

10. The conversion method as claimed in any of claims 8 or 9, **characterized in that** the repetitive loop repeats, in order, the following sequence of phases of operation:
- first differential mode (A);
- second common mode (D);
- first common mode (B);
- second common mode (D);
- second differential mode (C);
- second common mode (D);
- first common mode (B);
- second common mode (D).
